# EUROPEAN PATENT APPLICATION

(11) **EP 4 527 563 A1**
(43) Date of publication of application: **26.03.2025**
(21) Application number: 23824093.1
(22) Date of filing: 11.05.2023
(51) Int. Cl.: B25J 9/16, H02J 7/00, B25J 19/00, B25J 9/00, B25J 5/00, B62D 57/028

(54) **ROBOT CHARGING STATION AND METHOD FOR CHARGING ROBOT**

(30) Priority: 14.06.2022 KR 20220072016
(71) Applicant: LG Electronics Inc., Yeongdeungpo-gu Seoul 07336 (KR)
(72) Inventor: CHOI, Dongkyu, Seoul 08592 (KR); HONG, Eulpyo, Seoul 08592 (KR)
(74) Representative: Ter Meer Steinmeister & Partner
(86) International application number: PCT/KR2023/006420
(87) International publication number: WO 2023/243867

(57) **Abstract**

The present disclosure relates to a charging station of a robot and a method for charging the robot. Disclosed is a charging station configured to charge a robot by supplying power to the robot, including: a station body having a space inside and placed on a ground to allow the robot to approach and climb up the station body; a rotating part disposed in the station body and coupled to the station body so as to be rotatable relative thereto; and a charging part coupled to an upper portion of the rotating part configured to rotate together with the rotating part according to a rotation of the rotating part, and provided with a power supply terminal so as to charge the robot.

## Description

### CROSS REFERENCE TO RELATED APPLICATION

The present application claims priority to Korea Patent Application No. 10-2022-0072016, filed on June 14, 2022, the entire contents of which are incorporated herein for all purposes by this reference.

### [Technical Field]

The present disclosure relates to a charging station of a robot and a method for charging the robot. More specifically, the present disclosure relates to a charging station configured to enter the charging station through a forward movement for climbing up the charging station and to leave the charging station through a forward movement after charging is completed, and a method for charging the robot using the charging station.

### [Background Art]

Recently, with the advancement of a robot technology, the use of robots is increasing not only in industrial fields but also at home.

Home robots are robots that perform home tasks on behalf of people, such as helping with housework such as cleaning or controlling home appliances, or robots that act as a user's assistant or provide training to the user using artificial intelligence (AI), robots that replace companion animals, etc.

There are not only robots that perform functions in a state of being fixed at a specific location but also movable mobile robots. In particular, in the case of robots used at home, the mobile robots that replace the user or move around the home while following the user are mainly used. Among the mobile robots, two-wheeled robots with two wheels have advantages of occupying a small area of ground.

Home robots are operated using embedded batteries like the conventional mobile robots dedicated to cleaning, and therefore, regular charging of the battery is required. To this end, a charging station like the charging station of the conventional cleaning robot may be provided for the home robots as well.

The prior art literature, Korea Patent No. 0575703 discloses a charging stand returning system of a robot cleaner and a method for operating the same.

The charging stand returning system disclosed in the prior art literature is configured such that a robot cleaner is guided to a charging stand sensing area by a supporter sensor, and after the robot cleaner is guided to a certain position, the robot cleaner recognizes the charging stand in a three-dimensional way using the supporter sensor and is docked to the charging standard.

At this instance, the robot cleaner guided to the certain position rotates by 180 degrees to be docked to the charging stand through a rearward movement.

However, home robots having two wheels and a main body and connecting the main body and the wheels through legs has a problem in that a rotation in place like that of the robot cleaner according to the prior art literature is not easy and even if the robot rotates in place, a position of a center point is dislocated because a center of gravity is configured at a high position and a support point to the ground is not separately provided except the two wheels.

To solve the problem, when configuring the system to allow the robot to climb the charging station through a forward movement, on the other hand, there is a problem in that the robot may leave the charging station only through the rearward movement when the charging is completed.

### [DISCLOSURE]

### [Technical Problem]

The present disclosure aims to provide a charging station capable of allowing both operations of entering and leaving the charging station to be made possible through the forward movement and a method for charging the robot using the charging system.

In addition, the present disclosure aims to provide a charging station which is fixedly connected to the robot during the charging process and a method for charging the robot using the charging station.

### [Technical Solution]

One embodiment is a charging station configured to charge a robot by supplying power to the robot, including: a station body having a space inside and placed on a ground to allow the robot to approach and climb up the station body; a rotating part disposed in the station body and coupled to the station body so as to be rotatable relative thereto; and a charging part coupled to an upper portion of the rotating part configured to rotate together with the rotating part according to a rotation of the rotating part, and provided with a power supply terminal so as to charge the robot.

In the charging station according to one embodiment of the present disclosure, the station body may include: an inclined portion disposed at an entrance that the robot climbs and having an upward inclination toward a forward direction in which the robot approaches.

In the charging station according to one embodiment of the present disclosure, in the inclined portion, a wheel guide portion having a groove formed to guide a movement of the robot with respect to a wheel of the robot may be provided.

At this instance, in the wheel guide portion, at the entrance that the robot climbs, a width of the groove may be formed to be greater than a width of the wheel, and the width of the groove may be narrowed in comparison with the entrance toward a forward direction of a climb path of the robot.

In the charging station according to one embodiment of the present disclosure, the rotating part may include: a seating plate allowing the wheel of the robot to be seated thereon and configured to be rotated by a rotation of a motor; and a power transmission part accommodated in an internal space of the station body together with the motor and configured to transmit power generated by the rotation of the motor to the seating plate.

In the charging station according to one embodiment of the present disclosure, the seating plate may include: wheel inserting grooves disposed at stop positions of left and right wheels of the robot so that the robot stops at a correct position; and a robot detecting button disposed in the wheel inserting groove and configured to detect a weight of the robot.

In the charging station according to one embodiment of the present disclosure, the power transmission part may include: a first transmission part configured to rotate by receiving a rotating power of the motor; a belt connected to the first transmission part; and a second transmission part coupled coaxially with the seating plate, connected to the belt, and configured to receive a rotating power of the first transmission part and to rotate the seating plate.

In the charging station according to one embodiment of the present disclosure, the power transmission part may further include: a tensioner configured to adjust tension of the belt.

**In** the charging station according to one embodiment of the present disclosure, the rotating part may further include: a protrusion portion connected to an outer circumferential surface of the second transmission part so as to protrude circumferentially outward of the second transmission part; and a micro-switch disposed at a position connected to the protrusion portion by a rotation of the second transmission part.

**In** the charging station according to one embodiment of the present disclosure, the charging part may include: a charging part body disposed between the left and the right wheels of the robot based on a state where the robot climbs up the rotating part; and an engagement groove disposed on an upper portion of the charging part body and into which an engagement member of the robot being inserted.

In the charging station according to one embodiment of the present disclosure, the charging part may further include: an engagement hook disposed in the engagement groove and configured to be engaged with the inserted engagement member of the robot.

In the charging station according to one embodiment of the present disclosure, the charging part may further include: a hook link having one end adjacent to the engagement hook and configured such that when one end of the engagement hook is caught by the engagement member of the robot, another end of the engagement hook is caught by the one end of the hook link; and a hook switch adjacent to another end of the hook link and configured to press the another end of the hook link so as to release catching of the engagement hook.

Another embodiment is a method for charging a robot by a robot system comprising the robot and a charging station configured to charge the robot by supplying power, including: a climbing step of allowing a wheel of the robot to climb up a rotating part of the charging station; a coupling step of allowing a charging terminal of the robot and a power supply terminal of the charging station to be electrically connected to each other so that power is supplied to the robot; and a rotating step of allowing the rotating part of the charging station to rotate together with the robot so that a direction in which a front surface of the robot is headed is changed by 180 degrees.

In the method for charging a robot according to one embodiment of the present disclosure, the robot may include: a robot body in which a charging terminal is provided; leg units provided on left and right side surfaces of the robot body, respectively, and coupled to the wheels configured to roll on a ground; and a suspension motor accommodated in the robot body and connected to the leg units on left and right sides, respectively, so as to provide a driving force to the leg units.

In the method for charging a robot according to one embodiment of the present disclosure, the coupling step may include: a robot body descending step of moving the robot body downward by the leg unit through drive of the suspension motor so as to allow the charging terminal and the power supply terminal to contact each other to be coupled to each other; and a robot body fixing step of allowing the engagement member disposed below the robot body and the engagement hook disposed on an upper portion of the charging station to be engaged with each other.

In the method for charging a robot according to one embodiment of the present disclosure, the method may further include: a separating step of separating the charging terminal and the power supply terminal; and a rotating to return step of allowing the rotating part to rotate to return to an initial position after the robot leaves the charging station.

Still another embodiment is a method for charging a robot by a robot system comprising the robot and a charging station configured to charge the robot by supplying power, including: an entering step of allowing the robot to move and approach to the charging station and climbing up a station body of the charging station; a charging step of allowing a charging terminal provided in the robot and a power supply terminal provided in the charging station to be electrically connected to each other; and a leaving step of allowing the robot to leave the charging station.

In the still another embodiment of the method for charging a robot, in the entering step, at least one or more motors among the wheel motor and the terminal rotating motor may be driven.

In the still another embodiment of the method for charging a robot, in the charging step, the robot body may be moved toward a direction close to a ground.

In the still another embodiment of the method for charging a robot, in the charging step, the suspension motor may be driven to allow the robot body and the wheel to be close to each other.

In the still another embodiment of the method for charging a robot, the robot body may be moved toward a direction away from a ground.

In the still another embodiment of the method for charging a robot, in the leaving step, an attitude change of the robot body may occur at least once or more throughout the entering step, the charging step, and the leaving step.

In the still another embodiment of the method for charging a robot, in the entering step and the leaving step, the wheel motor may be driven to be rotated in one direction.

In the still another embodiment of the method for charging a robot, a rotational direction of the suspension motor in the entering step and a rotational direction of the suspension motor in the leaving step may be opposite to each other.

### [Advantageous Effect]

According to the present disclosure, because a seating plate is configured to rotate by 180 degrees after the robot is coupled to the charging station, an operation of the robot to enter the charging station and an operation of the robot to leave the charging station can both be made possible through a forward movement. Therefore, there is an effect that entry and exit of the robot into/from the charging station can be both made easy.

In addition, according to the present disclosure, when the robot is coupled to the charging station, the engagement hook of the charging station and the engagement member of the robot are engaged with each other, therefore, fixed engagement between the robot and the charging station is possible. Therefore, power supply to the robot while charging is underway can be stably maintained.

Effects which may be obtained by the present invention are not limited to the aforementioned effects, and other technical effects not described above may be evidently understood by a person having ordinary skill in the art to which the present invention pertains from the following description.

### [Description of Drawings]

FIG. 1 is a perspective view for describing a robot according to one embodiment of the present disclosure.
FIG. 2 is an exploded perspective view of FIG. 1.
FIG. 3 is a front view of the robot according to one embodiment of the present disclosure.
FIG. 4 is a rear view of the robot according to one embodiment of the present disclosure.
FIG. 5 is a side view of the robot according to one embodiment of the present disclosure.
FIG. 6 is a bottom view of the robot according to one embodiment of the present disclosure.
FIG. 7 is a view for describing a state in which an upper functional module has been removed from the robot according to one embodiment of the present disclosure.
FIG. 8 is a view for describing a leg unit in the robot according to one embodiment of the present disclosure.
FIG. 9 is a view for describing a connection relationship of the leg unit in the robot according to one embodiment of the present disclosure.
FIG. 10 is a view for describing a second link in the robot according to one embodiment of the present disclosure.
FIG. 11 is a view for describing a structure for hiding an electric wire in the robot according to one embodiment of the present disclosure.
FIGS. 12 and 13 are views for describing position changes of a wheel according to a movement of the leg unit in the robot according to one embodiment of the present disclosure.
FIG. 14 is a view for describing a relationship between the arrangement of the wheel and the arrangement for coupling to a lower functional module in the robot according to one embodiment of the present disclosure.
FIG. 15 is a block diagram of the robot according to one embodiment of the present disclosure.
FIG. 16 is a view for describing a state in which a robot body in the robot according to one embodiment of the present disclosure is coupled to the lower functional module.
FIG. 17 is a perspective view of a charging station according to one embodiment of the present disclosure.
FIG. 18 is an exploded developed view illustrating some parts of FIG. 17.
FIG. 19 is a view for describing a structure of a power transmission part in the charging station according to one embodiment of the present disclosure.
FIG. 20 is a perspective view of FIG. 19.
FIG. 21 is an exploded developed view of the power transmission part separated from the station body.
FIG. 22 is a plan view of the charging station according to one embodiment of the present disclosure.
FIG. 23 is a view for describing disengagement between the robot and the charging station in the charging station according to one embodiment of the present disclosure.
FIG. 24 is a view describing engagement between the robot and the charging station in the charging station according to one embodiment of the present disclosure.
FIG. 25 is a flowchart of a method for charging the robot according to one embodiment of the present disclosure.
FIGS. 26 and 27 are views illustrating operations corresponding to an operation S100 of FIG. 25.
FIG. 28 is a view illustrating an operation corresponding to an operation S200 of FIG. 25.
FIG. 29 is a view illustrating an operation corresponding to an operation S300 of FIG. 25.
FIG. 30 is a view illustrating an operation corresponding to an operation S400 of FIG. 25.
FIG. 31 is a view illustrating an operation corresponding to an operation S500 of FIG. 25.
FIG. 32 is a flowchart illustrating a flow of another embodiment of a method for charging the robot.

### [Mode for Invention]

Hereinafter, exemplary embodiments of the present disclosure will be described in detail with reference to the accompanying drawings.

Since the present disclosure may have various changes and various embodiments, specific embodiments are shown in the accompanying drawings and specifically described in the detail descriptions. This is not intended to limit the present disclosure to specific embodiments and should be construed to include all modifications, equivalents, and substitutes included in the spirit and technical scope of the present disclosure.

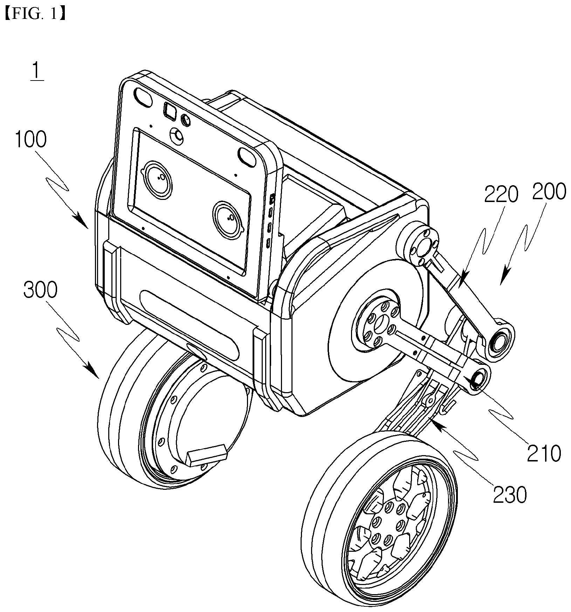

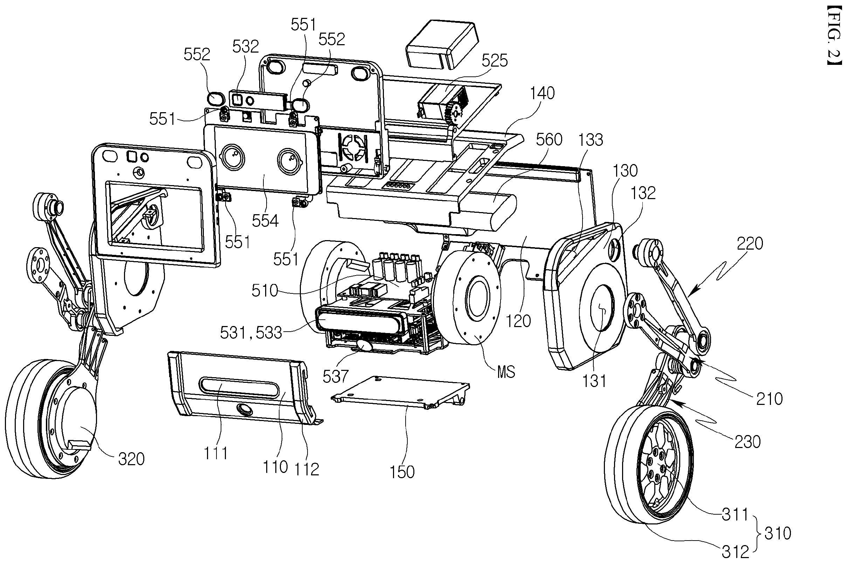

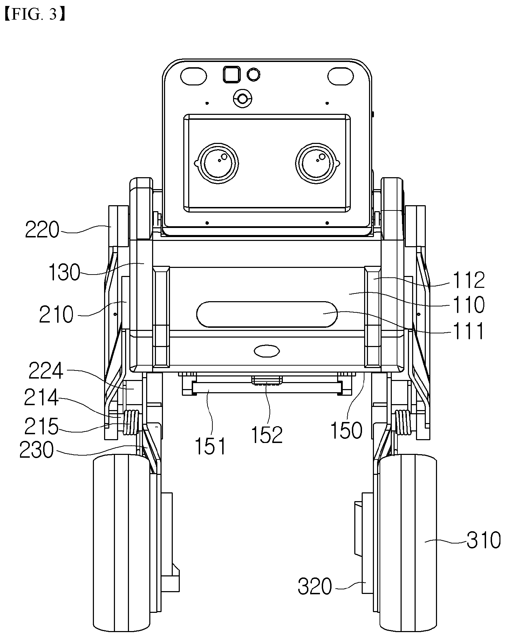

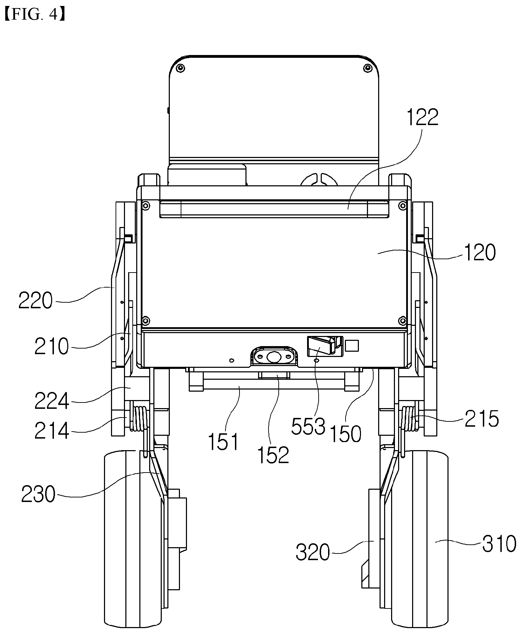

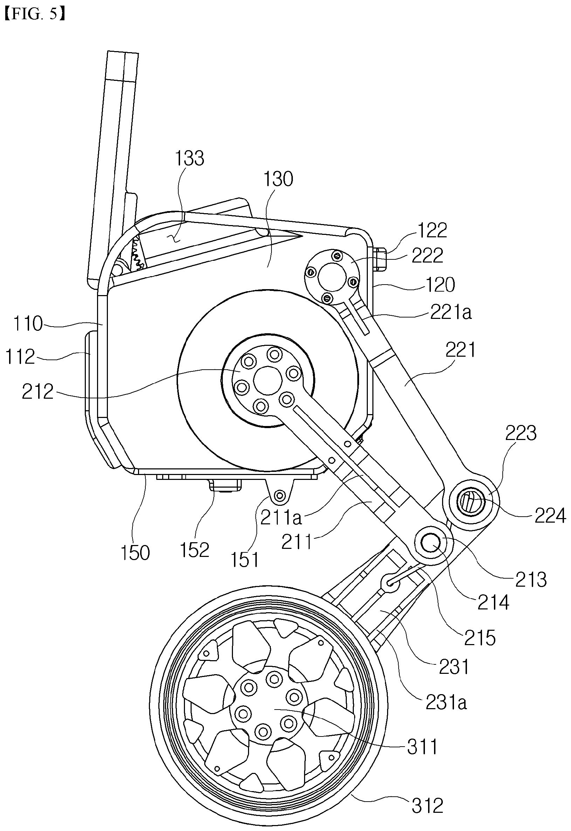

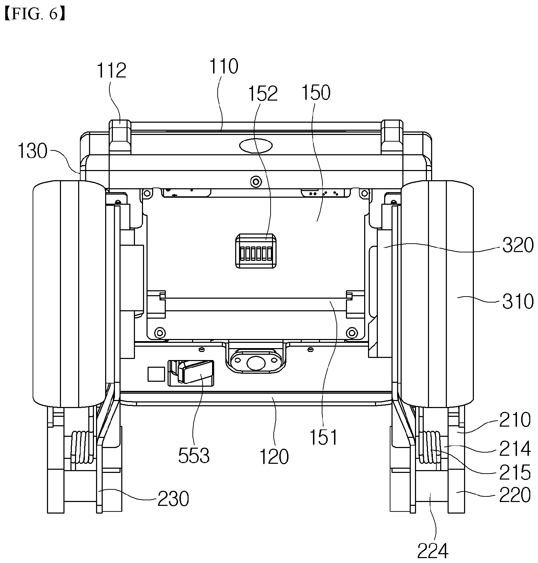

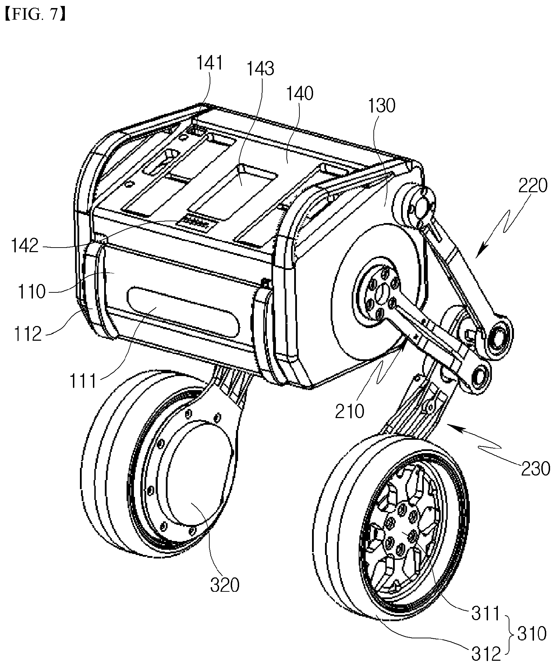

FIG. 1 is a perspective view for describing a robot according to one embodiment of the present disclosure, FIG. 2 is an exploded perspective view of FIG. 1, FIG. 3 is a front view of the robot according to one embodiment of the present disclosure, FIG. 4 is a rear view of the robot according to one embodiment of the present disclosure, FIG. 5 is a side view of the robot according to one embodiment of the present disclosure, FIG. 6 is a bottom view of the robot according to one embodiment of the present disclosure, and FIG. 7 is a view for describing a state in which an upper functional module has been removed from the robot according to one embodiment of the present disclosure.

Referring FIGS. 1 to 7, a robot 1 according to one embodiment of the present disclosure will be described as follows.

The robot 1 according to the embodiment of the present disclosure is placed on a floor surface (ground) to move along a floor surface B. Therefore, the following description will be made by setting a vertical direction based on a state in which the robot 1 is placed on the floor.

In addition, the following description will be made by setting a side at which a mapping camera 531 to be described below is disposed with respect to a battery 560 as a front. In addition, the following description will be made by setting a direction opposite to the front as a rear with respect to the battery 560.

A "lowest portion" of each component described in the embodiment of the present disclosure may be a portion of each component that is located to be lowest when the robot 1 according to the embodiment of the present disclosure is used by being placed on the floor, or may be a portion closet to the floor.

The robot 1 according to the embodiment of the present disclosure includes a robot body 100, a leg unit 200, and a wheel unit 300. In this case, the leg unit 200 is coupled to both side surfaces of the robot body 100, and the wheel unit 300 is coupled to the leg unit 200.

### Robot body

The robot body 100 may form an exterior of the robot 1. Components constituting the robot 1 may be coupled to the robot body 100.

For example, the leg unit 200 is coupled to each of frames 130 of both side surfaces of the robot body 100. In addition, a bumper 112 may be coupled to a front cover 110 provided on a front surface of the robot body 100.

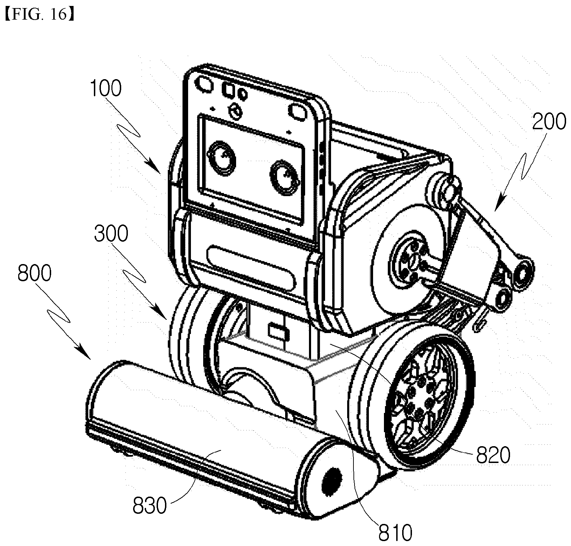

In particular, functional modules 700 and 800 may be detachably coupled to the robot body 100 according to one embodiment of the present disclosure. Here, the functional modules 700 and 800 may include the upper functional module 700 coupled to an upper portion of the robot body 100 and the lower functional module 800 coupled to a space between a pair of wheels 310. (Refer to FIGS. 1 and 16)

Therefore, the upper functional module 700 may be detachably coupled to an upper cover 140 disposed at an upper side of the robot body 100. The lower functional module 800 may be detachably coupled to a lower cover 150 disposed at a lower side of the robot body 100.

With this configuration, it is possible to perform various functions by coupling the functional modules 700 and 800 to the robot body 100. In addition, a new function may be added to the function in use by replacing the functional modules 700 and 800, or a new function may be added to the function in use by additionally mounting the functional modules 700 and 800.

In the embodiment of the present disclosure, the robot body 100 may be formed in a shape that has a horizontal width (or a diameter) larger than a vertical height. The robot body 100 may assist the robot 1 to have a stable structure and provide a structure that is advantageous in maintaining balance when the robot 1 moves (travels).

Some components constituting the robot 1 may be accommodated inside the robot body 100. For example, an internal space of the robot body 100 may accommodate one or more motors including a suspension motor MS, one or more sensors, and the battery 560.

The robot body 100 includes a front cover 110. The front cover 110 constitutes a front exterior of the robot 1. That is, the front cover 110 may be disposed at the foremost portion of the robot 1 when the robot 1 travels forward.

For example, the front cover 110 of the robot body 100 may be formed in a flat shape. As another example, the front cover 110 may have a plate shape with a curved surface. As still another example, the front cover 110 may have a plate shape bent at a predetermined angle.

The front cover 110 may be provided with a window 111. The window 111 may be made of a material through which light may transmit. For example, the window 111 may be made of a material through which infrared (IR), visible rays, or ultraviolet (UV) rays may transmit.

The front cover 110 includes an outer surface exposed to the outside of the robot 1 and an inner surface disposed on a back surface of the outer surface.

The bumper 112 may be coupled to the outer surface of the front cover 110. That is, the bumper 112 may be disposed in front of the robot body 100. For example, the bumper 112 may be provided at both end portions of the outer surface of the front cover 110, and a pair of bumpers 112 may be disposed in parallel in a vertical direction.

The bumper 112 may be provided to move relatively with respect to the robot body 100. For example, the bumper 112 may be coupled to the robot body 100 to reciprocate in a front-rear direction of the robot body 100.

The bumper 112 may be coupled along a portion of a front edge of the front cover 110. Alternatively, the bumper 112 may be coupled along the entire edge of the front cover 110. With this configuration, when the robot 1 collides with another object or person, the bumper 112 can protect the robot body 100 and components accommodated inside the robot body 100 by absorbing an impact applied to the robot body 100.

A mapping camera 531 may be disposed behind the inner surface of the front cover 110. Specifically, the mapping camera 531 may be disposed immediately behind the window 111. With this configuration, the first camera 531 may detect objects or people disposed in front of the robot 1.

Meanwhile, although not shown, the front cover 110 may include an input unit through which a control command is input from a user, a display unit for visually conveying information about an operating state of the robot 1 to the user, etc. For example, the front cover 110 may include a touch screen for visually displaying the operating state of the robot 1 and allowing the control command to be input from the user.

The robot body 100 includes a rear cover 120.

The rear cover 120 constitutes a rear exterior of the robot 1. For example, the rear cover 120 may be formed in a flat plate shape. As another example, the rear cover 120 may have a plate shape with a curved surface.

A manipulation unit 553 for adjusting power of the robot 1 may be disposed on the rear cover 120.

The manipulation unit 553 may be manipulated by the user, and the robot 1 may be turned on or off by manipulating the manipulation unit 553.

The manipulation unit 553 may be provided on the rear cover 120 to pivot in a left-right direction or provided to pivot in the vertical direction according to an embodiment.

For example, when the user pushes one side of the manipulation unit 553 and the manipulation unit 553 pivots to one side, the robot 1 may be turned on. **In** addition, when the user pushes the other side of the manipulation unit 553 and the manipulation unit 553 pivots to the other side, the robot 1 may be turned off.

A rear bumper 122 may be coupled to an outer surface of the rear cover 120. That is, the rear bumper 122 may be disposed behind the robot body 100. For example, the rear bumper 122 may be provided on the outer surface of the rear cover 120 and may be disposed in the horizontal direction. With this configuration, when the robot 1 collides with another object or person, the bumper 122 can protect the robot body 100 and the components accommodated inside the robot body 100 by absorbing an impact applied to the robot body 100.

The robot body 100 includes a side frame 130.

The side frame 130 constitutes the exterior of both side surfaces of the robot 1. For example, the side frame 130 may be disposed on each of both side surfaces of the robot 1 and configured to face each other. For example, the side frame 130 may be formed in a flat plate shape. That is, both side surfaces of the robot body 100 may be formed in a flat plate shape and disposed in parallel. As another example, at least a portion of the side frame 130 may be formed in a curved shape.

The side frame 130 is coupled to the front cover 110 and the rear cover 120. The side frame 130 may connect the front cover 110 to the rear cover 120. With this configuration, the robot body 100 may have an internal space surrounded by the front cover 110, the rear cover 120, and the two side frames 130.

The leg unit 200 may be disposed outside the side frame 130. Specifically, a first link 210 and a second link 220 may be rotatably coupled to the outside of the side frame 130.

Generally, in a two-wheeled robot, a support structure is disposed vertically under the robot body to support a load of the robot. However, when the support structure is present vertically under the robot body, there is a limitation in that a space under the robot cannot be used.

To solve this, the robot 1 according to the embodiment of the present disclosure has the leg unit 200 coupled to the side frame 130.

The suspension motor MS may be disposed inside the side frame 130.

Link coupling holes 131 and 132 are formed in the side frame 130. The link coupling holes include the first link coupling hole 131 and the second link coupling hole 132.

The first link coupling hole 131 is formed in a circular hole shape in the side frame 130. At least a portion of the first link 210 may be rotatably accommodated in the first link coupling hole 131. For example, one end portion of the first link 210 may be coupled to a shaft of the suspension motor MS through the first link coupling hole 131.

The second link coupling hole 132 is formed in a circular hole shape in the side frame 130. At least a portion of the second link 220 may be rotatably accommodated in the second link coupling hole 132. For example, the shaft formed at one side of the second link 220 may be rotatably coupled by passing through the second link coupling hole 132.

Meanwhile, the first link coupling hole 131 may be formed to have a larger diameter than the second link coupling hole 132.

The first link coupling hole 131 and the second link coupling hole 132 may be formed at a predetermined interval. For example, the center of the first link coupling hole 131 in a circular hole shape and the center of the second link coupling hole 132 in a circular hole shape may be disposed at the predetermined interval.

The first link coupling hole 131 and the second link coupling hole 132 may be disposed at a predetermined inclination with respect to the ground. For example, in a state in which the robot 1 is placed on the ground, the first link coupling hole 131 may be disposed at a lower side of the side frame 130, and the second link coupling hole 132 may be disposed at an upper rear side of the side frame 130.

With this configuration, the side frame 130 in which the link coupling holes 131 and 132 are formed may function as a kind of link.

Meanwhile, according to an embodiment, a handle hole 133 may be formed in the side frame 130. For example, the handle hole 133 may be formed at an upper front side of the side frame 130. With this configuration, the user may lift the robot body 100 upward by inserting his/her hand into the handle hole 133 and gripping the side frame 130.

The upper cover 140 constitutes an upper exterior of the robot 1. The upper cover 140 is coupled to the front cover 110, the rear cover 120 and the two side frames 130. Therefore, the upper cover 140 may cover an upper side of the internal space surrounded by the front cover 110, the rear cover 120, and the two side frames 130.

In a state in which the robot 1 is placed on the ground, the upper cover 140 may be disposed to be inclined at a predetermined angle with respect to the ground. For example, a front end portion of the upper cover 140 may be disposed closer to the ground than a rear end portion thereof is.

The upper functional module 700 may be coupled to the upper cover 140. The upper functional module 700 may be detachably coupled to an upper side of the upper cover 140. For example, a hook accommodation groove 141 may be formed to be hook-coupled to the upper functional module 700 in the upper cover 140. With this configuration, the upper functional module 700 may be coupled to the robot body 100 by only a user's simply operation of pushing the hook of the upper functional module 700 into the hook accommodation groove 141.

The robot body 100 may supply power to the upper functional module 700. Specifically, the upper cover 140 may include a terminal through which power may be supplied to the upper functional module 700.

In addition, the robot body 100 may transmit and receive signals to/from the upper functional module 700. Specifically, the upper cover 140 may include the terminal through which the signals may be transmitted and received to and from the upper functional module 700.

Meanwhile, in the embodiment of the present disclosure, the terminal through which power may be supplied to the upper functional module 700 and the terminal through which the signals may be transmitted and received to and from the upper functional module 700 may be disposed together on the upper cover 140. For example, the upper cover 140 may include a pogo pin 142 including two power pins and four signal pins.

At least one guide groove 143 may be formed in the upper cover 140. A lower surface of the upper functional module 700 may be coupled to the guide groove 143. With this configuration, the guide groove 143 may guide a coupling location of the upper functional module 700.

The lower cover 150 forms a lower exterior of the robot 1. The lower cover 150 is coupled to the front cover 110, the rear cover 120, and the two side frames 130. Therefore, the lower cover 150 may cover a lower side of the internal space surrounded by the front cover 110, the rear cover 120, and the two side frames 130.

The lower functional module 800 may be coupled to the lower cover 150. The lower functional module 800 may be detachably coupled to a lower side of the lower cover 150. Specifically, the lower cover 150 may include a coupling bar 151 to be latch-coupled to the lower functional module 800.

The coupling bar 151 may be formed in a cylindrical shape and disposed in the left-right direction of the robot 1. In addition, a pair of protrusions connected to the coupling bar 151 may be formed to protrude from the lower cover 150.

The lower cover 150 may include a charging terminal 152. The charging terminal 152 may be disposed on a lower surface of the lower cover 150.

In this case, the charging terminal 152 may be disposed at a position facing the charging terminal provided on a charging station 900. The charging terminal 152 may be electrically connected to a charging terminal provided on the charging station 900. The robot 1 may receive power from the charging station 900 through the charging terminal 152. In addition, the power supplied to the charging terminal 152 may be supplied to the battery 560.

Meanwhile, in general, in the two-wheeled robot, the support structure is disposed vertically under the robot body to support the load of the robot. However, when the support structure is present vertically under the robot body, there is a limitation in that the space under the robot cannot be used.

To solve this, the robot 1 according to one embodiment of the present disclosure has the leg unit 200 disposed on both side surfaces of the robot body 100. Therefore, a module coupling space 153 to which the lower functional module 800 is coupled is formed at the lower side of the lower cover 150.

The module coupling space 153 may be formed between the pair of leg units 200. For example, the module coupling space 153 may be a space vertically under the coupling bar 151. That is, the module coupling space 153 may be a space having a predetermined width ΔS in the left-right direction.

Therefore, since the lower functional module 800 is coupled to the space between the lower portion of the robot body 100 and the pair of leg units 200, thereby minimizing the volume of the robot 1 in the state in which the lower functional module 800 is mounted.

Meanwhile, although not shown, according to an embodiment, the robot body 100 may further include an external case. The external case may constitute the overall exterior of the robot body 100. The external case may cover the exteriors of the front cover 110, the rear cover 120, the side frame 130, the upper cover 140, and the lower cover 150. For example, the external case may be formed in an elliptical shape formed to extend in the left-right direction.

### Leg unit

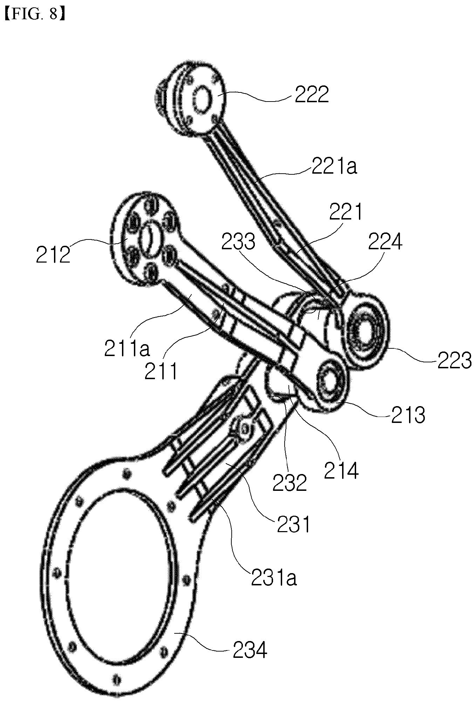

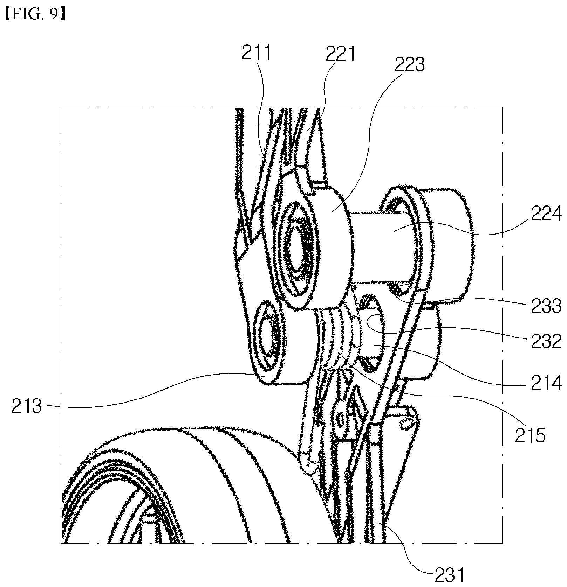

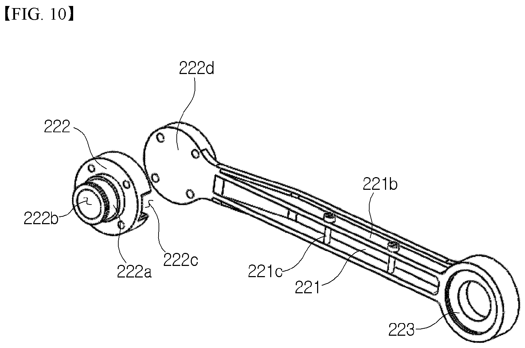

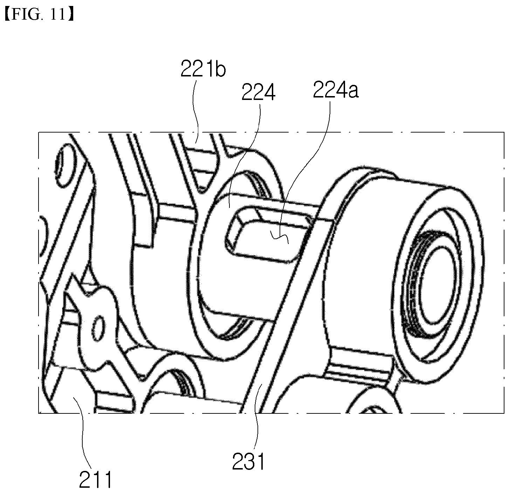

FIG. 8 is a view for describing a leg unit in the robot according to one embodiment of the present disclosure, FIG. 9 is a view for describing a connection relationship of the leg unit in the robot according to one embodiment of the present disclosure, FIG. 10 is a view for describing a second link in the robot according to one embodiment of the present disclosure, and FIG. 11 is a view for describing a structure for hiding an electric wire in the robot according to one embodiment of the present disclosure.

The leg unit 200 of the robot 1 according to one embodiment of the present disclosure will be described with reference to FIGS. 8 to 11 as follows.

The leg unit 200 may be coupled to the robot body 100 to support the robot body 100. For example, a pair of leg units 200 are provided and are each coupled to the side frame 130 of the robot body 100. In this case, at least a portion of the leg unit 200 is disposed closer to the ground than the robot body 100. Therefore, the robot body 100 may travel in the form of standing on the ground by the pair of leg units 200. That is, gravity applied to the robot body 100 may be supported by the leg unit 200, and a height of the robot body 100 can be maintained.

In the robot 1 according to one embodiment of the present disclosure, the leg unit 200 is coupled to only both side surfaces of the robot body 100. That is, the leg unit 200 is not coupled to the lower and rear surfaces of the robot body 100.

Therefore, as shown in FIGS. 3 to 14, a space is formed between the lower side of the lower cover 150 and the pair of leg units 200. For example, a space in which a rectangular parallelepiped-shaped lower functional module 800 may be accommodated may be formed between the lower side of the lower cover 150 and the pair of leg units 200.

The leg unit 200 includes the first link 210, the second link 220, and the third link 230. In this case, the first link 210 and the second link 220 are rotatably coupled to the side frame 130 and the third link 230, respectively. That is, the first link 210 and the second link 220 are link-coupled to the side frame 130 and the third link 230, respectively.

The first link 210 is link-coupled to the side surface of the robot body 100. For example, the first link 210 may be link-coupled to the side frame 130.

The first link 210 is connected to the suspension motor MS. For example, the first link 210 may be connected to the shaft of the suspension motor MS directly or through a gear. With this configuration, the first link 210 receives a driving force from the suspension motor MS.

The first link 210 includes a first link body 211, a motor coupling portion 212, and a link coupling portion 213.

The first link body 211 is formed in a frame shape which extends while connecting between the motor coupling portion 212 and the link coupling portion 213. The motor coupling portion 212 is provided at one side of the first link body 211 in a longitudinal direction, and the link coupling portion 213 is provided at the other side of the first link body 211 in the longitudinal direction. In this case, the motor coupling portion 212 may be disposed farther from the ground than the link coupling portion 213.

The first link body 211 may be formed in a shape that is bent at least once. For example, the other side of the first link body 211 provided with the link coupling portion 213 may be disposed farther from the robot body 100 than the one side provided with the motor coupling portion 212. Therefore, a distance between the pair of first link bodies 211 increases from the top to the bottom in the vertical direction. With this configuration, the first link 210 can stably support the robot body 100.

A rib 211a may be formed on the first link body 211. For example, the rib may be formed to protrude from the first link body 211 in the longitudinal direction. **In** this case, the rib 211a may be formed in an area in which the first link body 211 is bent. With this configuration, the rib 211a can increase durability by reinforcing the first link 210.

The motor coupling portion 212 is formed to be connected to one end portion of the first link body 211.

The motor coupling portion 212 is rotatably accommodated in the first link coupling hole 131 of the side frame 130. For example, the motor coupling portion 212 may be formed in a disk shape or a circular plate shape. **In** this case, a maximum diameter of the motor coupling portion 212 may be equal to or smaller than a maximum diameter of the first link coupling hole 131. Therefore, the motor coupling portion 212 may be connected to the suspension motor MS through the first link coupling hole 131.

The motor coupling portion 212 is connected to the suspension motor MS. For example, the motor coupling portion 212 is fixedly coupled to the shaft of the suspension motor MS. With this configuration, when the suspension motor MS is driven, the motor coupling portion 212 may be rotated in conjunction with the rotation of the shaft of the suspension motor MS.

The link coupling portion 213 is formed on the other end portion of the second link body 211.

The link coupling portion 213 is rotatably coupled to the third link 230. Specifically, the link coupling portion 213 is rotatably coupled to the third link 230 through a first link shaft 214. For example, the link coupling portion 213 may be formed in a disk shape, and the first link shaft 214 may be coupled by passing through the center of the link coupling portion 213. **In** addition, the first link shaft 214 may be rotatably coupled by passing through the third link 230. With this configuration, the first link 210 and the third link 230 may be connected to rotate relatively.

The first link shaft 214 is provided to connect the first link 210 to the third link 230. For example, the first link shaft 214 may be coupled by passing through the link coupling portion 213 of the first link 210 and/or the third link 230. **In** this case, the first link shaft 214 may be rotatably coupled to the link coupling portion 213 and/or the third link 230. With this configuration, the first link shaft 214 may be an axis about which the third link 230 rotates.

A gravity compensator 215 compensates for the robot body 100 that moves down vertically due to gravity. That is, the gravity compensator 215 provides a force for supporting the robot body 100.

For example, the gravity compensator 215 may be a torsion spring. The gravity compensator 215 may be wound to surround an outer circumferential surface of the first link shaft 214. In addition, one end portion of the gravity compensator 215 is fixedly coupled by being inserted into the first link 210, and the other end portion of the gravity compensator 215 is fixedly coupled by being inserted into the third link 230.

The gravity compensator 215 applies a force (rotational force) in a direction in which an angle between the first link 210 and the third link 230 increases. For example, both end portions of the gravity compensator 215 contract in advance to apply a restoring force in a direction in which the angle between the first link 210 and the third link 230 increases. Therefore, even when the robot 1 is placed on the ground and gravity is applied to the robot body 100, the angle between the first link 210 and the third link 230 can be maintained within a predetermined angle range.

With this configuration, it is possible to prevent the robot body 100 from moving down toward the ground even when the suspension motor MS is not driven. Therefore, the gravity compensator 215 prevents energy loss due to driving the suspension motor MS and maintains the height of the robot body 100 to a predetermined distance or more from the ground.

The second link 220 is link-coupled to the side surface of the robot body 100. For example, the second link 220 may be link-coupled to the side frame 130. That is, the second link 220 may be coupled to the side frame 130 to which the first link 210 is coupled together.

The second link 220 includes a second link body 221, a frame coupling portion 222, and a link coupling portion 223. In this case, the frame coupling portion 222 may be disposed farther from the ground than the link coupling portion 223.

The second link body 221 is formed in a frame shape which extends while connecting between the motor coupling portion 222 and the link coupling portion 223. The motor coupling portion 222 is provided at one side of the second link body 221 in a longitudinal direction, and the link coupling portion 223 is provided at the other side of the second link body 221 in the longitudinal direction.

The second link body 221 may be formed in a shape that is bent at least once. For example, the other side of the second link body 221 provided with the link coupling portion 223 may be disposed farther from the robot body 100 than the one side provided with the frame coupling portion 222. Therefore, a distance between the pair of second link bodies 221 increases from the top to the bottom in the vertical direction. With this configuration, the second link 220 can stably support the robot body 100.

The second link body 221 includes an inner surface facing the robot body 100 and an outer surface facing a direction away from the robot body 100.

A rib 221a may be formed on the second link body 221. For example, the rib 221a may be formed to protrude from the outer surface of the second link body 221 in the longitudinal direction. In this case, the rib 221a may be formed in an area in which the second link body 221 is bent. With this configuration, the rib 221a can increase durability by reinforcing the second link 220.

An electric wire accommodation wall 221b may be formed on the second link body 221. For example, a pair of electric wire accommodation walls 221b may be formed to protrude from the inner surface of the second link body 221 in the longitudinal direction. In this case, the pair of electric wire accommodation walls 221b may be formed in parallel at a predetermined interval. With this configuration, the electric wire may be accommodated in the space surrounded by the second link body 221 and the electric wire accommodation walls 221b. Therefore, it is possible to prevent the electric wire from being exposed to the outside.

In addition, the second link 220 may be provided with an electric wire support pin 221c. The electric wire support pin 221c may pass through the pair of electric wire accommodation walls 221b. The electric wire support pin 221c may be disposed in a direction crossing the pair of electric wire accommodation walls 221b. With this configuration, the electric wire accommodation wall 221b may close a portion of an open area in the space surrounded by the second link body 221 and the electric wire accommodation walls 221b. Therefore, it is possible to prevent the electric wire from coming out of the space surrounded by the second link body 221 and the electric wire accommodation walls 221b.

The frame coupling portion 222 is formed on one end portion of the second link body 221.

The frame coupling portion 222 is rotatably coupled to the second link coupling hole 132 of the side frame 130. For example, the frame coupling portion 222 may be provided with a coupling shaft 222a coupled by passing through the side frame 130.

The coupling shaft 222a may be formed in a cylindrical shape. For example, an outer diameter of the other end portion of the coupling shaft 222a may be larger than an outer diameter of one end portion of the coupling shaft 222a coupled to the side frame 130 in an axial direction (longitudinal direction).

A hollow 222b may be formed in the coupling shaft 222a. The electric wire may pass through the hollow 222b. With this configuration, it is possible to prevent the electric wire through which power is supplied from the battery 560 to a wheel motor MW from being exposed to the outside.

In addition, the electric wire through hole 222c may be formed in the coupling shaft 222a. The electric wire through hole 222c may be formed on an outer circumferential surface of the other end portion of the coupling shaft 222a in the axial direction. With this configuration, in the robot body 100, the electric wire passing through the hollow 222b may pass through the electric wire through hole 222c and may be accommodated in the second link body 221.

The coupling shaft 222a may be coupled to a rotational connection plate 222d. For example, the rotational connection plate 222d may be formed in a disk shape, and a diameter of the rotational connection plate 222d may be formed to be smaller than a diameter of the other end portion of the coupling shaft 222a in the axial direction. Therefore, the rotational connection plate 222d may be coupled by being accommodated in the other end portion of the coupling shaft 222a in the axial direction.

The rotational connection plate 222d may be formed integrally with the second link body 221. An outer end portion of the rotational connection plate 222d in a radial direction may be formed to be connected to the second link body 221. With this configuration, the rotational connection plate 222d may couple the second link body 221 to the coupling shaft 222a.

The link coupling portion 223 is formed on the other end portion of the second link body 221.

The link coupling portion 223 is rotatably coupled to the third link 230. Specifically, the link coupling portion 223 is rotatably coupled to the third link 230 through a second link shaft 224. For example, the link coupling portion 223 may be formed in a disk shape, and the second link shaft 224 may be coupled by passing through the center of the link coupling portion 223. In addition, the second link shaft 224 may be rotatably coupled by passing through the third link 230. With this configuration, the second link 220 and the third link 230 may be connected to rotate relatively.

The second link shaft 224 is provided to connect the second link 220 to the third link 230. For example, the second link shaft 224 may be coupled by passing through the link coupling portion 223 of the second link 220 and/or the third link 230. **In** this case, the second link shaft 224 may be rotatably coupled to the link coupling portion 223 and/or the third link 230. With this configuration, the second link shaft 224 may be an axis about which the third link 230 rotates.

The third link 230 is link-coupled to the first link 210 and the second link 220 and coupled to the wheel unit 300.

The third link 230 includes a third link body 231. The third link body 231 is formed in a frame shape which extends while connecting between a fourth link coupling hole 233 and a wheel coupling portion 234. A third link coupling hole 232 and the fourth link coupling hole 233 are formed at one side of the third link 230 in the longitudinal direction, and the wheel coupling portion 234 is formed at the other side of the third link 230 in the longitudinal direction.

The third link body 231 may be formed in a shape that is bent at least once. For example, a pair of third link bodies 231 have a distance between the other sides at which the wheel coupling portion 234 is formed, which is shorter than a distance between one sides at which the third link coupling hole 232 and the fourth link coupling hole 233 are formed.

At least one rib 231a may be formed to protrude from the third link body 231 in the longitudinal direction. The rib 231a may be formed in a bent area of the third link body 231. With this configuration, the rib may reinforce the third link body 231.

The third link coupling hole 232 is formed in the third link body 231. Specifically, the third link coupling hole 232 is formed at one side of the third link body 231 in the longitudinal direction. The first link shaft 214 may be rotatably coupled by passing through the third link coupling hole 232. For example, the third link coupling hole 232 may be formed in a circular hole shape. With this configuration, the third link 230 may be rotatably connected to the first link 210 through the first link shaft 214.

A hole into which the gravity compensator 215 is coupled may be formed in the third link body 231. For example, the other end portion of the torsion spring may be coupled by being inserted into the hole.

The fourth link coupling hole 233 is formed in the third link body 231. Specifically, the fourth link coupling hole 233 is formed at one side of the third link body 231 in the longitudinal direction. The second link shaft 224 may be rotatably coupled by passing through the fourth link coupling hole 233. For example, the fourth link coupling hole 233 may be formed in a circular hole shape. With this configuration, the third link 230 may be rotatably connected to the second link 220 through the second link shaft 224.

The fourth link coupling hole 233 may be disposed farther from the wheel coupling portion 234 than the third link coupling hole 232.

The third link 230 is coupled to the wheel unit 300. In this case, a wheel housing 320 is coupled to an inner surface (surface facing the robot body 100) of the third link body 231, and the wheel 310 is rotatably coupled to an outer surface (back surface of the inner surface) of the third link body 231.

Meanwhile, the wheel coupling portion 234 is formed on the third link body 231. Specifically, the wheel coupling portion 234 is formed at the other side of the third link body 231 in the longitudinal direction.

For example, the wheel coupling portion 234 may be formed in a circular hole shape. The wheel motor MW may be accommodated in the wheel coupling portion 234.

Meanwhile, in a state in which the robot 1 stands on the ground, the wheel coupling portion 234 may be disposed vertically under the robot body 100. For example, in the state in which the robot 1 stands on the ground, the wheel coupling portion 234 may be disposed vertically under the suspension motor MS.

The suspension motor MS is relatively heavy among the components accommodated in the robot body 1. Therefore, the entire weight of the robot body 1 may be concentrated vertically under the suspension motor MS.

With this configuration, the wheel 310 coupled to the wheel coupling portion 234 can maintain the balance of the robot body 1 by supporting a lower side of the center of gravity of the robot body 1.

### Wheel unit

Referring to FIGS. 1 to 7, the wheel unit 300 may be rotatably coupled to the leg unit 200 and may roll along the ground to move the robot body 100 and the leg unit 200.

The wheel unit 300 includes the wheel 310 that is in contact with the ground and rolls along the ground, and the wheel housing 320 in which the wheel motor MW is accommodated.

The wheel 310 is provided to have a predetermined radius and a predetermined width in the axial direction. As shown in FIG. 3, when viewing the robot 1 from the front, the side frame 130 and the leg unit 200 may be disposed vertically above the wheel 310. In addition, as shown in FIG. 5, when viewing the side surface of the robot 1, the suspension motor MS, the first link coupling hole 131, and the second link coupling hole 132 may be disposed vertically above the wheel 310.

The wheel 310 includes a wheel frame 311 formed in a circular shape. The wheel frame 311 may be formed in a cylindrical shape with an open one side facing the shaft of the wheel motor MW. Therefore, a weight of the wheel frame 311 can be reduced.

However, when the wheel frame 311 is formed in a cylindrical shape, the overall rigidity of the wheel frame 311 can be reduced. In consideration of such a point, the rib (not shown) for reinforcing rigidity may be formed on each of the inner and outer surfaces of the wheel frame 311.

A wheel tire 312 is coupled to an outer circumferential surface of the wheel frame 311. The wheel tire 312 may be formed in an annular shape with a diameter of the wheel tire 312 fitted into the outer circumferential surface of the wheel frame 311.

Grooves of a predetermined pattern may be recessed in the outer circumferential surface of the wheel tire 312 to increase a grip force of the wheel tire 312.

In one embodiment, the wheel tire 312 may be made of an elastic rubber material.

The wheel housing 320 may have a cylindrical shape with an open one side in the axial direction so that the wheel motor MW is accommodated therein. In this case, a closed portion of the wheel housing 320 may be coupled to an inner surface of the third link 230. With this configuration, it is possible to prevent an external foreign substance from flowing into the wheel housing 320.

Meanwhile, the wheel housing 320 may be provided with a sensor for measuring a distance to the ground. For example, the sensor may be a time of flight sensor (ToF sensor). With this configuration, a controller 510 may determine whether the wheel 310 is in contact with the ground.

The wheel 310 is rotatably coupled to the leg unit 200. Specifically, the wheel 310 is rotatably coupled to an outer surface (surface facing the outside of the robot 1) of the third link 230.

The wheel motor MW may provide a driving force to the wheel 310. The wheel motor MW may generate a rotational force by receiving power from the battery 560.

The wheel motor MW may be accommodated in the wheel housing 320. In addition, the wheel motor MW may pass through the wheel coupling portion 234 of the third link 230, and the shaft of the wheel motor MW may be coupled to the wheel frame 311 of the wheel 310. That is, the wheel motor MW may be an in-wheel motor.

With this configuration, when the wheel motor MW is driven, the wheel 310 may roll along the ground while rotating, and the robot 1 may move along the ground.

### Balance of robot by four-bar linkage

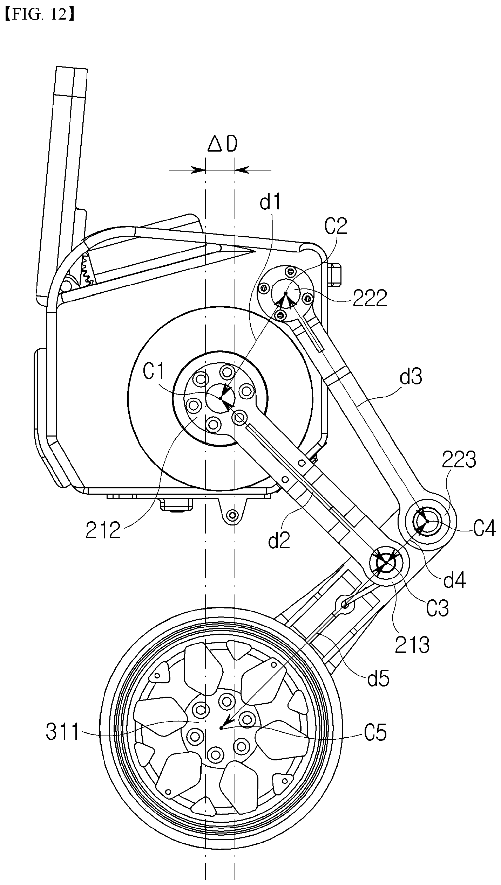

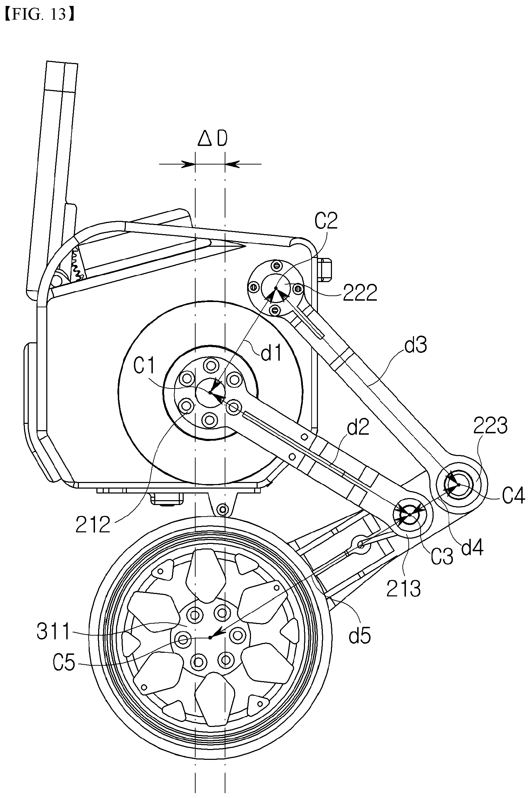

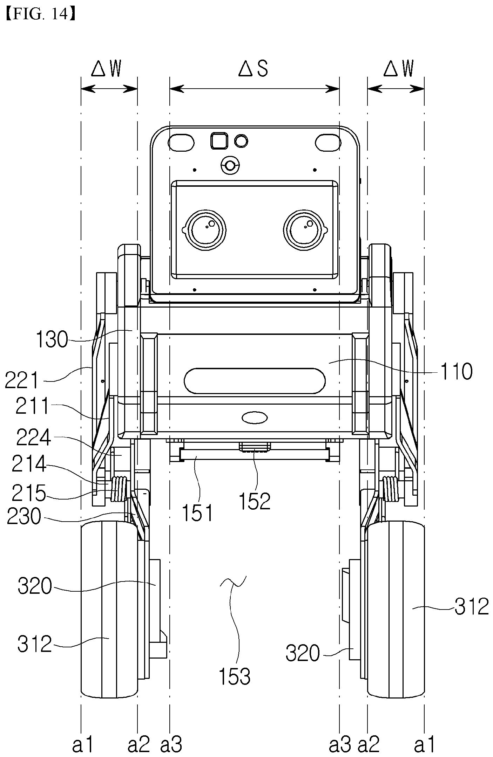

FIGS. 12 and 13 are views for describing position changes of the wheel according to a movement of the leg unit in the robot according to one embodiment of the present disclosure, and FIG. 14 is a view for describing a relationship between the arrangement of the wheel and the arrangement for coupling to the lower functional module in the robot according to one embodiment of the present disclosure.

With reference to FIGS. 12 to 14, the balance of the robot 1 according to one embodiment of the present disclosure is described as follows.

The robot 1 according to the embodiment of the present disclosure may support the robot body 100 through the four-bar linkage structure and maintain the balance of the robot body 100.

The balance of the robot 1 in the front-rear direction according to one embodiment of the present disclosure will be described with reference to FIGS. 12 and 13 as follows.

The leg unit 200 is provided on each of both side surfaces of the robot body 100. Specifically, the first link 210 and the second link 220 are rotatably coupled to the side frames 130 provided at both sides of the robot body 100, and the first link 210 and the second link 220 are link-coupled to the third link 230. That is, the robot 1 supports the robot body 100 through the four-bar linkage composed of the side frame 130, the first link 210, the second link 220, and the third link 230.

Meanwhile, in the embodiment of the present disclosure, the gravity compensator 215 generates a restoring force in a direction of lifting the robot body 100. Therefore, even in a state in which the suspension motor MS is not driven, the pair of leg units 200 can maintain the state of lifting the robot body 100 to a predetermined height from the ground.

Meanwhile, the robot 1 according to the embodiment of the present disclosure can maintain the balance by lifting any one of the pair of wheels 310 to pass an obstacle or driving the suspension motor MS when the height of the robot body 100 is lowered for charging, etc.

When the suspension motor MS is driven, the link coupling portion 213 moves upward as the first link 210 rotates about the motor coupling portion 212. In addition, the third link 230 is moved by rotating the first link 210. In addition, the second link 220 is rotated by being pushed by the third link 230. As a result, one end portion of the third link 230 may be moved rearward, and the other end portion of the third link 230 may be moved upward.

With this configuration, even when the wheel 310 moves upward and downward, a movement range of the wheel 310 in the front-rear direction may be limited. Therefore, the robot 1 can stably maintain the balance.

Therefore, the robot 1 according to the present disclosure may pass obstacles of various heights using the four-joint link structure.

In the robot 1 according to the embodiment of the present disclosure, a center C1 of the first link coupling hole 131 and a center C2 of the second link coupling hole 132 may be disposed at a predetermined first distance d1. In addition, a center C1 of the motor coupling portion 212 of the first link 210 and a center C3 of the link coupling part 213 of the first link 210 may be disposed at a predetermined second distance d2. In addition, a center C2 of the frame coupling portion 222 of the second link 220 and a center C4 of the link coupling portion 223 of the second link 220 may be disposed at a predetermined third distance d3. In addition, a center C3 of the third link coupling hole 232 of the third link 230 and a center C4 of the fourth link coupling hole 233 of the third link 230 may be disposed at a predetermined fourth distance d4. In addition, the center C3 of the third link coupling hole 232 of the third link 230 and a rotation center C5 of the wheel coupling portion 234 of the third link 230 may be disposed at a predetermined fifth distance d5.

In this case, the first distance d1, the second distance d2, the third distance d3, the fourth distance d4, and the fifth distance d5 may be disposed to have a predetermined length ratio. For example, the first distance d1 may be 0.5 times or more and 0.6 times or less the fifth distance d5. The second distance d2 may be 0.95 times or more and 1.05 times or less the fifth distance d5. The third distance d3 may be 1.1 times or more and 1.2 times or less the fifth distance d5. The fourth distance d4 may be 0.2 times or more and 0.3 times or less the fifth distance d5.

With this configuration, even when the third link 230 is moved by driving the motion motor MS, a movement distance of the wheel coupling portion 234 in the front-rear direction can be maintained within a predetermined deviation ΔD. For example, even when the third link 230 is moved, the movement distance of the center C5 of the wheel coupling portion 234 in the front-rear direction can be maintained within 2% of the fifth distance d5.

Therefore, while the robot 1 is moving, the center of gravity of the robot body 100 may be disposed vertically above the wheel 310. Therefore, the robot 1 can be prevented from shaking in the front-rear direction while moving and can maintain the balance.

In addition, according to the robot 1 according to the present disclosure, even when the wheels 310 move upward while the robot 1 passes an obstacle, the balance can be maintained without changing locations of the wheels 310 in the front-rear direction.

The balance of the robot 1 in the front-rear direction according to one embodiment of the present disclosure will be described with reference to FIG. 14 as follows.

As shown in FIG. 14, the robot body 100 is supported by the pair of leg units 200 and the pair of wheel units 300.

The load of the robot body 100 may be transmitted to the wheel 310 through the leg units 200, and the wheel 310 may support the leg units 200 and the robot body 100.

In this case, the pair of leg units 200 may be disposed symmetrically (line symmetrically). In particular, the link-coupled portions of the pair of leg units 200 may be disposed in parallel.

Specifically, the motor coupling portions 212 of the pair of first links 210 may be disposed in parallel. The link coupling portions 213 of the pair of first links 210 may be disposed in parallel. The frame coupling portions 222 of the pair of second links 220 may be disposed in parallel. The link coupling portions 223 of the pair of second links 220 may be disposed in parallel. The wheel coupling portions 234 of the pair of third links 230 may be disposed in parallel.

With this configuration, the module coupling space 153 having a predetermined width ΔS is formed at the lower side of the robot body 100. The module coupling space 153 may be formed in parallel to the pair of leg units 200. In addition, the module coupling space 153 may be formed in parallel to the pair of wheels 310.

At least one or more motors including the suspension motor MS and the battery 560 may be provided inside the robot body 100, and when the robot 1 is placed on the ground, the entire load of the robot body 100 in a state in which the motor and the battery 560 are accommodated may be applied to the leg units 200.

In particular, since the robot 1 according to one embodiment of the present disclosure is provided with the leg unit 200 at both side surfaces of the robot body 100, the load of the robot body 100 is concentrated on the pair of side frames 130 and the pair of leg units 200.

In this case, as shown in FIG. 14, based on when viewing the front surface of the robot 1 from the front of the robot 1, the side frame 130 and the leg units 200 may all be disposed vertically above the wheel 310.

That is, as shown in FIG. 14, both the side frames 130 and the leg units 200 may all be disposed between a virtual line a1 vertically extending an outer end portion of the wheel 310 in the axial direction and a virtual line a2 vertically extending the inner end portion of the wheel 310 in the axial direction.

In addition, thicknesses (length of the robot 1 in the left-right direction) of the leg unit 200 and the side frame 130 are smaller than a thickness (length of the robot 1 in the left-right direction, ΔW) of the wheel 310.

With this configuration, the entire load of the robot body 100 applied to the side frames 130 and the leg units 200 can be stably supported by the wheels 310 disposed thereunder in the direction of gravity.

Therefore, according to the robot 1 according to the embodiment of the present disclosure, the balance of the robot body 100 can be stably maintained by concentrating the load of the robot body 100 vertically above the pair of wheels 310.

In addition, the leg unit 200 may be pressed vertically downward by the load of the robot body 100, and the application of the load of the robot 1 in the left-right direction can be prevented, thereby preventing the robot 1 from shaking in the left-right direction.

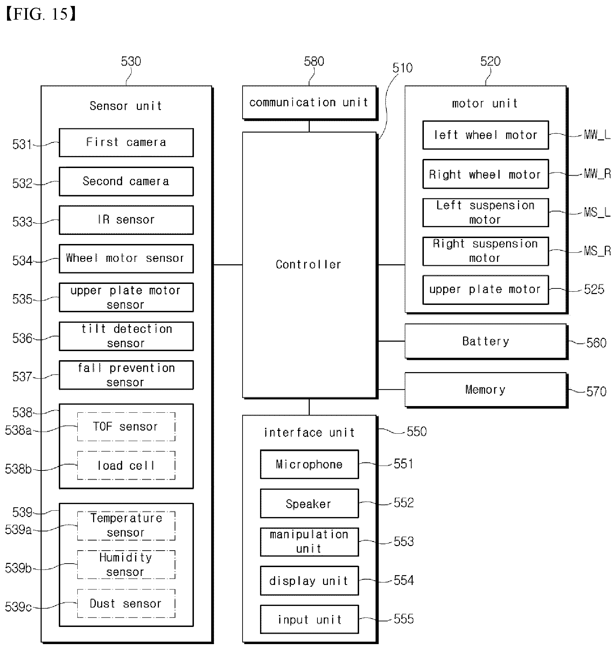

FIG. 15 is a block diagram of the robot according to one embodiment of the present disclosure.

Referring to FIG. 15, the robot 1 according to the embodiment of the present disclosure may include the controller 510, a motor unit 520, a sensor unit 530, an interface unit 550, the battery 560, a memory 570, and a communication unit 580.

Since components shown in the block diagram of FIG. 15 are not essential in implementing the robot 1, the robot 1 described herein may have a larger or fewer number of components than the components listed above.

First, the controller 510 may control the overall operation of the robot 1. The controller 510 may control the robot 1 to perform various functions according to setting information stored in the memory 570 to be described below.

The controller 510 may be disposed on the robot body 100. More specifically, the controller 510 may be provided by being mounted on a printed circuit board (PCB) disposed between the left wheel 310 and the right wheel 310.

The controller 510 may include all types of devices capable of processing data, such as a processor. Here, "processor" may be, for example, a data processing device built into hardware, which has a physically structured circuit to perform a function expressed by code or commands included in a program. As an example of the data processing device built into hardware, processing devices such as a microprocessor, a central processing unit (CPU), a processor core, a multiprocessor, an application-specific integrated circuit (ASIC), and a field programmable gate array (FPGA) may be included, but the scope of the present disclosure is limited thereto.

The controller 510 may receive information about an external environment of the robot 1 from at least one component of the sensor unit 530 to be described below. In this case, the information about the external environment may be, for example, information such as a temperature, humidity, and amount of dust in an interior where the robot 1 travels. Alternatively, the information may be, for example, cliff information. Alternatively, the information may be, for example, interior map information. Of course, the information about the external environment is not limited to the above examples.

The controller 510 may receive information about a current state of the robot 1 from at least one component of the sensor unit 530 to be described below. In this case, the current state may be, for example, tilt information of the robot body 100. Alternatively, the information may be, for example, information about a separation state between the wheel 310 and the ground. Alternatively, the information may be, for example, location information of the wheel motor MW. Alternatively, the information may be, for example, location information of the suspension motor MS. Of course, information about the current state of the robot 1 is not limited to the above examples.

The controller 510 may transmit a driving control command to at least one of components of the motor unit 520 to be described below. For example, the rotation of the wheel motor MW may be controlled for the traveling of the robot 1. Alternatively, for example, the rotation of the wheel motor MW may be controlled to maintain the horizontal attitude of the robot 1. Alternatively, for example, the rotation of the suspension motor MS may be controlled to maintain the horizontal attitude of the robot 1. Alternatively, for example, the rotation of the upper plate motor 525 may be controlled to adjust an angle of the upper functional module of the robot 1.

The controller 510 may receive a user's command through at least one of components of the interface unit 550 to be described below. For example, the command may be a command for turning on/off the robot 1. Alternatively, for example, the command may be a command for manually controlling various functions of the robot 1.

The controller 510 may output information related to the robot 1 through at least one of the components of the interface unit 550 to be described below. For example, the output information may be visual information. Alternatively, for example, the output information may be auditory information.

The motor unit 520 may include at least one motor and provide a driving force to a component connected to each motor.

The motor unit 520 may include the wheel motor MW for providing a driving force to the left and right wheels 310. More specifically, the motor unit 520 may include a left wheel motor MW_L for transmitting a driving force to the left wheel 310 and a right wheel motor MW_R for transmitting a driving force to the right wheel 310.

The wheel motors MW may be disposed in the wheel units 300, respectively. More specifically, the wheel motor MW may be accommodated in the wheel housing 320. The wheel motor MW may be accommodated in the wheel coupling portion 234.

The wheel motor MW is connected to the wheel 310. More specifically, a final output stage of a shaft or gear of the left wheel motor MW_L is connected to the left wheel 310. A final output stage of a shaft or gear of the right wheel motor MW_R is connected to the right wheel 310. Each of the left and right wheel motors MW rotates by being driven according to the control command of the controller 510, and the robot 1 travels along the ground due to the rotation of the wheel 310 according to the rotation of the wheel motor MW.

The motor unit 520 may include the suspension motor MS for providing a driving force to the left and right leg units 200. More specifically, the motor unit 520 may include a left suspension motor MS_L for transmitting a driving force to the left leg unit 200 and a right suspension motor MS_R for transmitting a driving force to the right leg unit 200.

The suspension motor MS may be disposed on the robot body 100. More specifically, the suspension motor MS may be disposed inside each of the side frames 130.

The suspension motor MS is connected to the first link 210. More specifically, a final output stage of a shaft or gear of the left suspension motor MS_L is connected to the left first link 210. A final output stage of a shaft or gear of the right suspension motor MS_R is connected to the right first link 210. Each of the left and right suspension motors MS rotates by being driven according to the control command of the controller 510, and as the first link 210 rotates according to the rotation of the suspension motor MS and the third link 230 connected to the first link 210 rotates, as a result, the wheel 310 connected to the third link 230 moves upward or downward.

Therefore, the robot 1 may lift or lower the wheel 310 and maintain a horizontal attitude when climbing an obstacle or traveling along a curved ground. A control method in more detail regarding the above-described operation will be described below.

The motor unit 520 may include the upper plate motor 525 for providing a driving force to the upper functional module. The upper plate motor 525 may be a servo motor. The servo motor is a well-known motor used where rotation angle control is required and has a limited operating range but has an advantage in that accurate position control is possible.

As described above, the upper functional module 700 may be detachably coupled to the upper cover 140 of the robot body 100. The upper functional module 700 may be provided in various forms according to functions. As an example, the upper functional module 700 may be a flat plate shape so that an object such as a mobile phone may be placed thereon. As an example, the upper functional module may have a shape provided with an accommodation groove so that cans, bottles, cups, etc. containing a fluid may be placed thereon and transported. As another example, the upper functional module 700 may be an interaction upper functional module provided to visually and audibly display a response of the robot 1 for emotional interaction with a user.

In this case, the interaction upper functional module 700 may include a display. The display may display facial expressions or eye shapes so that the user may feel that he/she is interacting with the robot 1. In this case, the display of the interaction upper functional module may rotate at a preset angle.

The upper plate motor 525 may provide a driving force to the display of the interaction upper functional module. The upper plate motor 525 may be disposed in the upper functional module. More specifically, a final output stage of a shaft or gear of the upper plate motor 525 is connected to the display. The upper plate motor 525 may be rotated by being driven according to a control command of the controller 510, and the display may rotate according to the rotation of the upper plate motor 525.

The sensor unit 530 may include at least one sensor, and each sensor may measure or detect information about an external environment of the robot 1 and/or information about a current state of the robot 1.

The sensor unit 530 may include the first camera 531.

The first camera 531 may be a mapping camera described above. The first camera 531 is provided to map an interior in which the robot 1 travels.

To this end, the first camera 531 may be disposed in front of the robot body 100. More specifically, the first camera 531 may be disposed behind the inner surface of the front cover 110. The first camera 531 may be disposed behind the window 111.

The first camera 531 may photograph the interior while traveling to perform simultaneous localization and mapping (SLAM). The controller 510 may implement the SLAM based on information about the surrounding environment photographed by the first camera 531 and information about the current location of the robot 1.

Meanwhile, a method in which the robot 1 according to the embodiment of the present disclosure implements the SLAM may be a method implemented using only the first camera 531, but is not limited thereto. For example, the robot 1 may implement the SLAM further using an additional sensor. The additional sensor may be, for example, a laser distance sensor (LDS).

The sensor unit 530 may include a second camera 532.

The second camera 532 is a component provided to recognize a user's location and/or face.

To this end, the second camera 532 may be disposed in the upper functional module 700. More specifically, the second camera 532 may be disposed adjacent to the display of the upper functional module700. The second camera 532 may be disposed on an upper portion of the display. The second camera 532 may be disposed between left and right speakers 552.

The second camera 532 may recognize the user's location by capturing a forward image of the display. To this end, the second camera 532 may include a depth module and an RGB module.

The depth module may acquire depth information of the image. For example, the depth information may be obtained in a manner of acquiring moving time information by measuring a retardation or phase shift of a modulated optical signal for all pixels of the captured image.

The RGB module may acquire color images (images). Edge characteristics, color distribution, frequency characteristics or wavelet transform, etc. may be extracted from the color images.

As described above, whether a user is present in front and/or the user's location may be recognized by acquiring distance information about an object to be recognized through the depth information from the forward image captured by the second camera 532 and calculating the edge characteristics, etc. extracted from the color images together.

The sensor unit 530 may include an IR sensor 533 for detecting infrared rays.

The IR sensor 533 may be an IR camera for detecting infrared rays.

The IR sensor 533 may be disposed on the robot body 100. More specifically, the IR sensor 533 may be disposed behind the inner surface of the front cover 110. The IR sensor 533 may be disposed behind the window 111. The IR sensor 533 may be disposed in a left-right direction or vertical direction from the first camera 532.

The IR sensor 533 may approach the module by allowing the IR sensor 533 to detect infrared rays emitted by an IR LED provided in a specific module. For example, the module may be a charging station 900 for charging the robot 1. For example, the module may be a lower functional module 800 detachably provided on the lower cover 150 of the robot 1.

The controller 510 may control the IR sensor 533 to start detecting the IR LED when a charging state of the robot 1 is a preset level or less. The controller 510 may control the IR sensor 533 to start detecting the IR LED when a command to find a specific module is received from a user.

The sensor unit 530 may include a wheel motor sensor 534.

The wheel motor sensor 534 may measure the location of the wheel motor MW. For example, the wheel motor sensor 534 may be an encoder. As is well known, the encoder may detect the location of the motor and also detect a rotational speed of the motor.

The wheel motor sensor 534 may be disposed on each of the left and right wheel motors MW. More specifically, the wheel motor sensor 534 may be connected to the final output stage of the shaft or gear of the wheel motor MW and accommodated inside the wheel housing 320 together with the wheel motor MW.

The sensor unit 530 may include an upper plate motor sensor 535.

The upper plate motor sensor 535 may measure a rotation angle of the display of the interaction upper functional module 700. For example, the upper plate motor sensor 535 may be a potentiometer for measuring a rotation angle.

The upper plate motor sensor 535 may be disposed in the interaction upper functional module 700. More specifically, the upper plate motor sensor 535 may be connected to the final output stage of the shaft or gear of the upper plate motor 525 and disposed behind the display together with the upper plate motor 525.

The sensor unit 530 may include a tilt detection sensor 536.

The tilt detection sensor 536 may measure a tilt angle of the robot body 100.

The tilt detection sensor 536 may be, for example, a three-axis acceleration sensor. The acceleration sensor is a sensor for detecting a gravitational acceleration of an object in a stationary state. Since the gravitational acceleration varies depending on a tilt angle of the object, the tilt angle is obtained by measuring the gravitational acceleration. However, there is a disadvantage in that a correct value cannot be obtained in a moving acceleration state rather than a stationary state.

The tilt detection sensor 536 may be, for example, a three-axis gyro sensor. The gyro sensor is a sensor for measuring an angular velocity. A tilt angle is obtained by integrating the angular velocity over the entire time. However, continuous errors occur in the angular velocity measured by the gyro sensor due to noise and other reasons, and due to these errors, an error in an integral value accumulatively occurs over time.

As a result, when a long time elapses in a stationary standby state, the tilt of the robot 1 may be accurately measured by the acceleration sensor, but an error is caused by the gyro sensor. While traveling, an accurate tilt value of the robot 1 may be measured using the gyro sensor, but a correct value cannot be obtained using the acceleration sensor.

Preferably, the tilt detection sensor 536 may be an inertial measurement unit (IMU) sensor. As is well known, the IMU sensor is a sensor in which a three-axis acceleration sensor, a three-axis gyro sensor, and a geomagnetic sensor are embedded together and is also referred to as an inertial measurement sensor. The disadvantages of the above-described acceleration sensor and gyro sensor may be compensated using the IMU sensor.

Hereinafter, in the present specification, an embodiment in which the IMU sensor is provided as the tilt detection sensor 536 will be described.

The IMU sensor may be disposed on the robot body 100. More specifically, the IMU sensor may be disposed adjacent to the controller 510. The IMU sensor may be provided by being mounted on a PCB inside the robot body 100. To increase the measurement accuracy of the tilt angle and direction, the IMU sensor is preferably disposed close to a central area of the robot body 100.

The IMU sensor may measure at least one of the three-axis acceleration, the three-axis angular velocity, and the three-axis geomagnetic data of the robot body 100 and transmit the same to the controller 510.

The controller 510 may calculate the tilted direction and angle of the robot body 100 using at least one of the acceleration, angular velocity, and geomagnetic data received from the IMU sensor. Based on the same, the controller 510 may perform control of maintaining the horizontal attitude of the robot body 100 to be described below.

The sensor unit 530 may include a fall prevention sensor 537 for detecting a cliff.

The fall prevention sensor 537 may be configured to detect a distance to the ground in front of the robot 1 along which it travels. The fall prevention sensor 537 may be configured in various ways within a range in which a relative distance between a point at which the fall prevention sensor 537 is formed and the ground may be detected.

For example, the fall prevention sensor 537 may include a light emitting unit for emitting light and a light receiving unit for receiving reflected light. The fall prevention sensor 537 may be configured as an infrared sensor. The fall prevention sensor 537 may be referred to as a cliff sensor.

The fall prevention sensor 537 may be disposed on the robot body 100. More specifically, the fall prevention sensor 537 may be disposed inside the front cover 110 of the robot body 100. Preferably, the fall prevention sensor 537 may be disposed inside a downward slope provided on the front cover 110. Therefore, the fall prevention sensor 537 may radiate light toward a front floor surface of the robot 1. That is, the fall prevention sensor 537 disposed inside the front slope may detect in advance whether a cliff is present in front of the robot 1 in a proceeding direction.

The light emitting unit of the fall prevention sensor 537 may radiate light obliquely toward the front floor surface. The light receiving unit of the fall prevention sensor 537 may receive light incident by being reflected from the floor surface. A distance between the front ground and the fall prevention sensor 537 may be measured based on a difference between a radiation time point and a reception time point of light.

When the distance measured by the fall prevention sensor 537 exceeds a predetermined value or exceeds a predetermined range, there may be a case where the front ground is suddenly lowered. With this principle, a cliff may be detected.

When the cliff is detected ahead, the controller 510 may control the wheel motor MW so that the robot 1 travels while avoiding the detected cliff. In this case, control of the wheel motor MW may be stop control. Alternatively, control of the wheel motor MW may be change control of a rotation direction.

The fall prevention sensor 537 may be additionally disposed inside the rear cover 120 of the robot body 100. Preferably, the fall prevention sensor 537 may be disposed inside a downward slope provided on the rear cover 120. Therefore, the fall prevention sensor 537 may radiate light toward a rear floor surface of the robot 1. That is, the fall prevention sensor 537 disposed inside the rear slope may detect in advance whether a cliff is present behind the robot in a proceeding direction.

The sensor unit 530 may include a contact detection sensor 538.

The contact detection sensor 538 may detect whether the wheel 310 has been in contact with the ground.

The contact detection sensor 538 may include a time of flight (TOF) sensor 538a for measuring a separation distance between the wheel 310 of the robot 1 and the ground. The TOF sensor 538a may be a three-dimensional (3D) camera to which a TOF technology is applied. As is well known, the TOF technology is a technology of measuring a distance to an object based on a round-trip flight time in which light radiated toward the object is reflected and returned.

The TOF sensor 538a may be disposed on the wheel unit 300. For example, the contact detection sensor 538 may be disposed on each of the left and right wheel housings 320. Whether the wheel 310 is in contact with the ground may be determined through the distance to the ground measured by the TOF sensor 538a. When the distance measured by the TOF sensor 538a is less than a preset distance (or less than the lower limit of a preset distance range), the wheel 310 is in a state of being in contact with the ground. When the distance measured by the TOF sensor 538a is the preset distance or more (or the upper limit or more of the preset distance range), the wheel 310 is in a state of being spaced from the ground.

The contact detection sensor 538 may include a load cell 538b that measures a magnitude of a force applied to some components of the robot 1.

As is well known, when the force is applied to the load cell 538b, a resistance value of a strain gauge provided on the surface changes. In this case, the magnitude of the force applied to the load cell 538b may be measured by changing the resistance value.

The load cell 538b may be disposed on the leg unit 200. Preferably, the load cell 538b may be disposed on each of the left and right third link bodies 231. While the wheel 310 is in a state of being in contact with the floor, the third link 230 is deformed by applying a normal force from the ground. A measured value of the load cell 538b is shown as a value different from an initial value depending on the deformation of the third link 230. Therefore, it may be determined whether the wheel 310 is in a state of being in contact with the ground.

The sensor unit 530 may include an environmental sensor 539.

The environmental sensor 539 may be configured to measure various environmental states outside the robot 1, that is, at home in which the robot 1 travels. The environmental sensor 539 may include at least one of a temperature sensor 539a, a humidity sensor 539b, and a dust sensor 539c.

The environmental sensor 539 may be disposed on the robot body 100. More specifically, the environmental sensor 539 may be disposed behind the robot body 100. As a possible embodiment, information measured by the environmental sensor 539 may be visually displayed on a display unit 554.

The interface unit 550 may include at least one component for interaction between the user and the robot 1, and each component may be provided to input a command from the user and/or output information to the user.

The interface unit 550 may include a microphone 551.

The microphone 551 is a component for recognizing the user's voice and may be provided in plural. The microphone 551 may be disposed in the upper functional module 700. More specifically, the microphone 551 may be disposed in the interaction upper functional module 700. The microphone 551 may be disposed adjacent to the display of the interaction upper functional module 700. Preferably, a total of four microphones 551 may be disposed with two microphones disposed on each of upper and lower portions of the display, respectively.

A voice signal received by the microphone 551 may be used to track the user's location. In this case, a known sound source tracking algorithm may be applied. For example, the sound source tracking algorithm may be a three-point measurement method (triangulation method) using a time difference in which a plurality of microphones 551 receive voice signals. The principle is that a location of the voice source is calculated using a location of each microphone 551 and a speed of a sound wave.

Meanwhile, when the microphone 551 cooperates with the second camera 532, the robot 1 may be implemented to find the user's location even when the user calls the robot 1 from a distance.

The interface unit 550 may include a speaker 552.

The speaker 552 may be disposed in the upper functional module 700. For example, the speaker 552 may be disposed adjacent to the display of the interaction upper functional module 700. The speaker 552 may be disposed on the upper portion of the display and provided at each of left and right sides thereof.

The speaker 552 may transmit information about the robot 1 as sound. The source of the sound transmitted by the speaker 552 may be sound data previously stored in the robot 1. For example, the pre-stored sound data may be voice data of the robot 1. For example, the pre-stored sound data may be a notification sound that guides the state of the robot 1.

The interface unit 550 may include the manipulation unit 553.

The manipulation unit 553 may receive a command that controls the power of the robot 1 to be turned on/off from the user.

A power-on operation may mean supplying power to the controller 510. A power-off operation may mean cutting-off the power supply to the controller 510. The power is supplied from the battery 560.

The power-off of the robot 1 through the manipulation unit 553 may mean complete power cutoff and have a different meaning from a power saving mode that temporarily stops power supply to each functional module. Control of the power saving mode may be performed by the controller 510 in a power-on state.

Meanwhile, since it is rare to completely cut off the power supply to the robot 1 serving as a pet or butler, it is preferable that the manipulation unit 553 is disposed behind the robot body 100.

The user's command to the manipulation unit 553 may be an operation of pivoting the manipulation unit 553 in the vertical direction or left-right direction. When the manipulation unit 553 is pivoted to one side by the user, the robot 1 may be turned on. When the manipulation unit 553 is pivoted by the user to the other side opposite to the one side, the robot 1 may be turned off.

However, a form of the manipulation unit 553 is not limited. As another example, the manipulation unit 553 may be a button for receiving an on/off command through the user's push operation. As another example, the manipulation unit 553 may be a sliding button for receiving the on/off command through the user's sliding operation. As still another example, the manipulation unit 553 may be a touch screen for receiving the on/off command through the user's touch operation.

The interface unit 550 may include the display unit 554 and an input unit 555.

The display unit 554 may include a display disposed in one or more modules. The display unit 554 may include a first display disposed on the front cover 110 of the robot body 100. The display unit 554 may include a second display disposed in the upper functional module 700.

The first and second displays may be formed as any one of a light emitting diode (LED), a liquid crystal display (LCD), a plasma display panel, and an organic light emitting diode (OLED).

Information such as operating time information of the robot 1 and power information of the battery 560 may be displayed on the first display or the second display.

The facial expression of the robot 1 may be displayed on the second display. Alternatively, the eyes of the robot 1 may be displayed on the second display. The current state of the robot 1 may be expressed by being personified as emotions through a facial shape or eye shape displayed on the second display. For example, when the user returns home after going out, a smiling facial expression or smiling eye shape may be displayed on the second display. Therefore, the user may feel the interaction with the robot 1.

The input unit 555 may be configured to receive a control command for controlling the robot 1 from the user. For example, the control command may be a command for changing various settings of the robot 1. For example, the settings may be voice volume, display brightness, power saving mode settings, etc.

The input unit 555 may be disposed on the front cover 110 of the robot body 100. The input unit 555 may be disposed adjacent to or on the first display.

The input unit 555 generates key input data input by the user to control the operation of the robot 1. To this end, the input unit 555 may be composed of a key pad, a dome switch, a touch pad (static pressure/electrostatic), etc. In particular, when the touch pad forms a layered structure with the first display, this may be referred to as a touch screen.

The battery 560 is configured to supply power to other components constituting the robot 1.

The battery 560 may be disposed on the robot body 100. More specifically, the battery 560 may be disposed at the rear side of the robot body 100. The battery 560 may be disposed behind the suspension motor MS.

The battery 560 may be charged by an external power source, and to this end, a charging terminal 152 for charging the battery 560 may be provided at one side of the robot body 100 or on the battery 560. As in the embodiment of the present disclosure, the charging terminal 152 may be disposed on the lower cover 150 of the robot body 100. Therefore, the robot 1 may be easily coupled to the charging station 900 in a manner of approaching the charging station 900 and seating the charging terminal 152 on the corresponding terminal of the charging station from the top.

The memory 570 is a component for storing various pieces of data for driving and operating the robot 1.

The memory 570 may store an application program and various pieces of data for autonomous driving of the robot 1. The memory 570 may also store pieces of data sensed by the sensor unit 530 and setting information for various settings selected or input by the user.

The memory 570 may include magnetic storage media or flash storage media, but the scope of the present disclosure is not limited thereto. The memory 570 may include an internal memory and/or an external memory and include volatile memories such as DRAMs, SRAMs, or SDRAMs, non-volatile memories such as one time programmable ROMs (OTPROMs), PROMs, EPROMs, EEPROMs, mask ROMs, flash ROMs, NAND flash memories, or NOR flash memories, flash drives such as SSD, compact flash (CF) cards, SD cards, Micro-SD cards, Mini-SD cards, XD cards, or memory sticks, or storage devices such as HDDs.

The memory 570 may be included in the controller 510 or provided as a separate component.

The communication unit 580 may be provided to transmit signals between internal components of the robot 1. The communication unit 580 may support, for example, controller area network (CAN) communication. The signals may be, for example, control commands transmitted from the controller 510 to another component.

The communication unit 580 may support wireless communication with other devices present outside the robot 1. A short-range communication module or a long-distance communication module may be provided as a wireless communication module for supporting wireless communication.

The short-distance communication may be, for example, Bluetooth communication, near field communication (NFC), etc.

The long-distance communication may be, for example, Wireless LAN (WLAN), Digital Living Network Alliance (DLNA), Wireless Broadband (Wibro), World Interoperability for Microwave Access (WiMAX), Global System for Mobile communication (GSM), Code Division Multi Access (CMDA), CDMA2000, Enhanced Voice-Data Optimized or Enhanced Voice-Data Only (EV-DO), Wideband CDMA (WCDMA), High Speed Downlink Packet Access (HSDPA), High Speed Uplink Packet Access (HSUPA), IEEE 802.16, Long Term Evolution (LTE), Long Term Evolution-Advanced (LTEA), Wireless Mobile Broadband Service (WMBS), Bluetooth Low Energy (BLE), Zigbee, Radio Frequency (RF), or Long Range (LoRa).

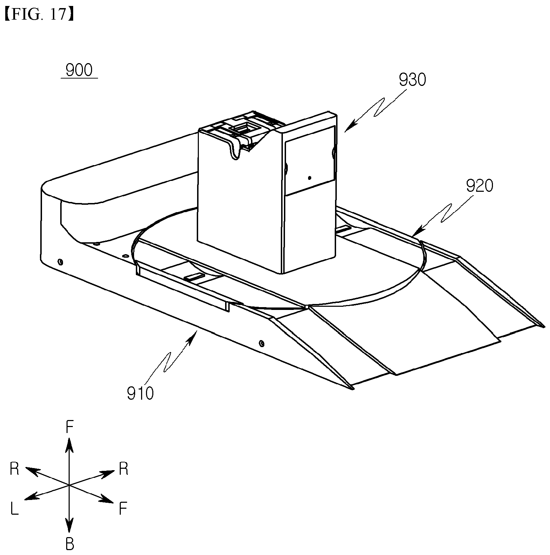

Hereinafter, the charging station 900 of the robot according to one embodiment of the present disclosure will be described with reference to FIGS. 17 and the following figures.

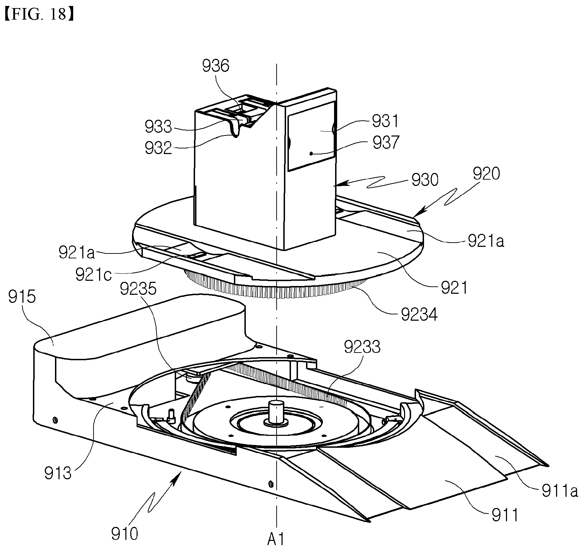

FIG. 17 is a perspective view of the charging station according to one embodiment of the present disclosure, and FIG. 18 is an exploded developed view illustrating some parts of FIG. 17.

Referring to FIGS. 17 and 18, the charging station 900 is provided to supply power to the robot 1 to charge the robot 1, and may include a station body 910, a rotating part 920, and a charging part 930.

Before describing each component, directions of the charging station 900 may be defined first. A direction in which an inclined portion 911 to be described below or a direction in which an entrance which the robot 1 enters so as to climb the charging station 900 is disposed may be defined as a forward direction. In addition, a direction in which a second accommodating portion 915 to be described below is disposed may be defined as a rearward direction.

The station body 910 has an internal space and is placed on the ground so that the robot 1 can approach thereto and climb.

The station body 910 may include the inclined portion 911 disposed at an entrance that the robot climbs.

The inclined portion 911 may have an upward inclination headed forward of a direction in which the robot 1 enters. More specifically, in the inclined portion 911, a forward end portion of the entrance side may be connected to the ground with no height difference, but may exhibit an inclination which leads upward in the forward direction in which the robot 1 approaches. At this instance, the forward direction in which the robot 1 approaches means a rearward direction based on the charging direction 900. With this configuration, the robot 1 may stand on the charging station 900 easily from the ground. 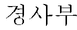
(911) 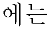 , 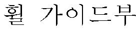 (911a) 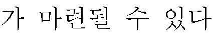 .

In the inclined portion 911, a wheel guide portion 911a may be provided.

The wheel guide portion 911a may be formed in a groove shape so as to guide a movement with respect to the wheel 310 of the robot 1. More specifically, the wheel guide portion 911a may be formed such that in the entrance that the robot 1 climbs, a width of the groove is formed greater than a width of the wheel 310, and the width of the groove is narrowed toward the forward direction of the climb path of the robot 1 compared to the entrance. By doing so, entry of the wheel 310 of the robot 1 into the charging station 900 can be made easy, but a left-to-right movement of the wheel 310 is restricted and the wheel 310 can be guided to a correct position due to the groove having the width being narrowed gradually.

The station body 910 may include a first accommodating portion 913.

The first accommodating portion 913 is connected to the inclined portion 911 and may accommodate some components of a power transmission part 923 to be described below in a space formed therein. A seating plate 921 to be described below and a charging part 930 may be disposed on an upper portion of the first accommodating portion 913.

The station body 910 may include a second accommodating portion 915.

The second accommodating portion 915 is connected to the first accommodating portion 913 and accommodates a controller 940 of the charging station in a space formed inside. Although not illustrated, a plug to be connected to a socket at home may be withdrawn from a rear surface of the second accommodating portion 915. In general, a socket is provided on a wall at home and the second accommodating portion 915 may be disposed such that the rear surface of the second accommodating portion 915 faces a wall surface.

The rotating part 920 may be disposed on the station body 910 and may be coupled to the station body 910 so as to be rotatable relative to the station body 910.

The rotating part 920 may include the seating plate 921 on which the wheel 310 of the robot 1 is seated.

The seating plate 921 may be disposed on an upper portion of the first accommodating portion 913 and may form some of the exterior of the first accommodating portion 913. An upper surface of the seating plate 921 may be connected to an upper surface of the first accommodating portion 913 without a level difference. For example, the seating plate 921 may be formed in a circular flat plate shape.

A wheel guide portion 921a in a groove shape may be formed so as to guide a movement of the wheel 310 of the robot 1. The wheel guide portion 921a of the seating plate 921 may be connected to the wheel guide portion 911a of the inclined portion 911 without a level difference. With this configuration, the robot 1 may pass through the inclined portion 911 and move to the seating plate 921 easily.

The seating plate 921 may be rotated by a rotation of the motor 9231. The seating plate 921 may rotate in a clockwise or an anti-clockwise direction based on a rotational axis A1 disposed in a vertical direction at a center of the seating plate 921. In a state in which the robot 1 is coupled to a charging part 930 to be described below, the seating plate 921 may rotate by 180 degrees together with the charging part 930. With this configuration, the robot 1 may climb the charging station 900 easily through a forward movement when climbing the charging station 900 for charging, and may leave the charging station 900 through the forward movement easily when leaving the charging station 900 after the charging is completed. That is, there is an effect that entry and exit of the robot 1 into/from the charging station 900 can be both easy.

The seating plate 921 may include wheel inserting grooves 921b disposed on the left and right sides, respectively. The wheel inserting grooves 921b may be disposed at stop positions of the left and right wheels of the robot 1 so that the robot 1 stops in a correct position. Here, the stop position of the wheel 310 means a position determined to allow the robot 1 to be coupled to the charging part 930.

For example, the wheel inserting groove 921b may be disposed approximately at a center of the wheel guide portion 921a. A groove of the wheel inserting groove 921b is formed to be deeper than a depth of a groove of the wheel guide portion 921a, and is formed in a shape corresponding to a shape of the wheel 310 of the robot 1, that is, an arch shape. With this configuration, the robot 1 may move along the wheel guide portion 921a and stop as soon as the wheel 310 is inserted into the wheel inserting groove 921b, and the wheel 310 may stably seated in the wheel inserting groove 921b formed in the arch shape.

The seating plate 921 may include robot detecting buttons 921c. The robot detecting button 921c may be disposed in each of the wheel inserting grooves 921b on the left and the right sides. A robot detecting button 921c may be pressed and pushed by a weight of the robot 1.

When the robot detecting button 921c detects the weight of the robot 1 and is pressed, an electric signal corresponding to an on-operational state of the robot detecting button 921c may be transmitted to the controller 940 of the charging station 900. Therefore, it is determined that the robot 1 is in a state in which the robot 1 has climbed up the charging station 900 for charging.

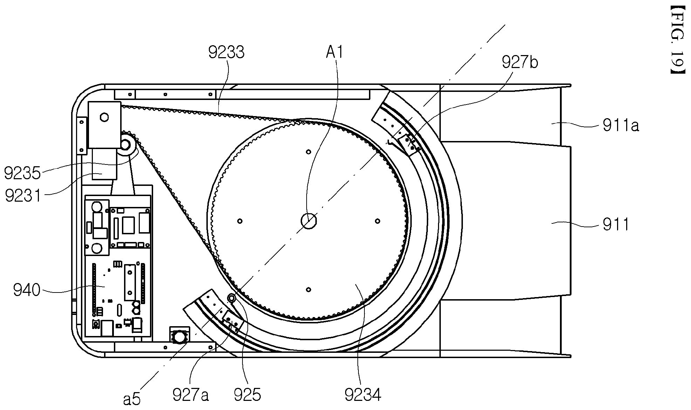

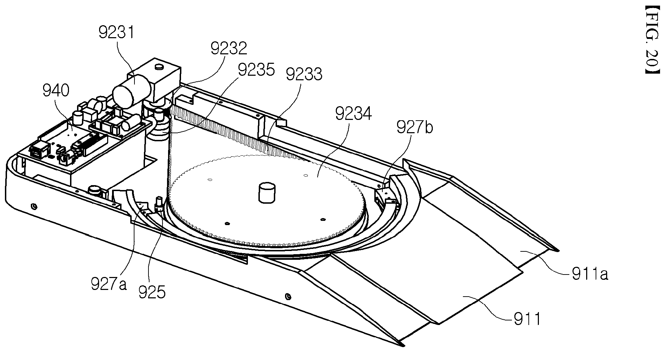

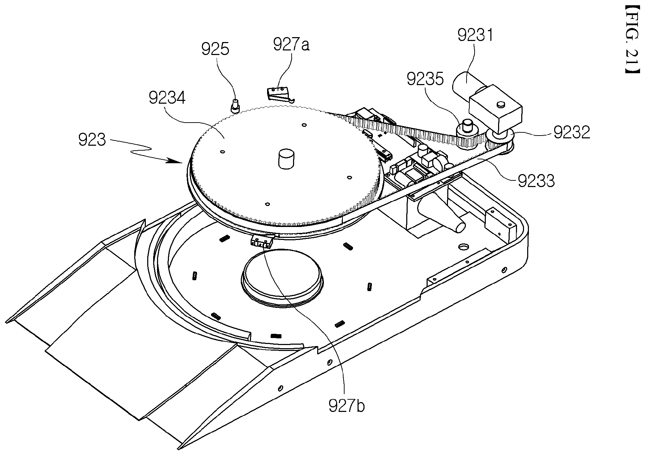

FIG. 19 is a view for describing a structure of the power transmission part in the charging station according to one embodiment of the present disclosure, FIG. 20 is a perspective view of FIG. 19, and FIG. 21 is an exploded developed view of the power transmission part separated from the station body.

The rotating part 920 may further include the power transmission part 923 configured to transmit power for rotating the seating plate 921.

Referring to FIGS. 19 to 21, the power transmission part 923 may be disposed below the seating plate 921 to be accommodated in an internal space of the station body 910. More specifically, the power transmission part 923 may be accommodated in an internal space of the first accommodating portion 913 and an internal space of the second accommodating portion 915 together with a motor 9231 configured to generate a power for rotating the seating plate 921. At least some components of the power transmission part 923 may be covered by the seating plate 921 so that they are not exposed to the outside. Here, the motor 9231 may be referred to as the terminal rotating motor 9231 so as to differentiate it from the other motor provided in the robot 1.

The power transmission part 923 may consist of a plurality of power transmission members so that power generated by a rotation of the motor 9231 can be transmitted to the seating plate 921. The power transmission part 923 may consist of a belt and a pulley like an embodiment illustrated in the present disclosure. However, the power transmission part 923 is not limited thereto, but may be configured as a combination of gear parts directly gear-engaged with each other.

The power transmission part 923 may included a first transmission part 9232, a belt 9233, and a second transmission part 9234.

The first transmission part 9232 may rotate by receiving a rotational power of the motor 9231. (Refer to FIG. 20) The first transmission part 9232 may be a belt pulley disposed on a side of the motor 9231. The first transmission part 9232 may be coaxially connected to a rotational axis of the motor 9231 according to arrangement of the motor 9231, and may be indirectly connected to the motor 9231 through other gear part provided to switch a direction of the rotational axis of the motor 9231.

The second transmission part 9234 may rotate the seating plate 921 by receiving a rotational power of the first transmission part 9232. The second transmission part 9234 may be a belt pulley disposed on a side of the seating plate 921. The second transmission part 9234 may be coaxially connected to the seating plate 921 and rotate the seating plate 921. That is, the second transmission part 9234 may rotate about the rotational axis A1 of the seating plate 921.

The belt 9233 may be connected to the first transmission part 9232 and the second transmission part 9234. The belt 9233 is a medium through which the power is transmitted from the first transmission part 9232 to the second transmission part 9234, and for example, may be a timing belt. However, the belt is not limited thereto, and may be a V-belt or a flat belt. According to a kind of the belt 9233, shapes of the first transmission part 9232 and the second transmission part 9234 may be changed in correspondence with the belt, and for example, when the belt 9233 is the timing belt 9233, gear-teeth are provided on outer circumferential surfaces of the first transmission part 9232 and the second transmission part 9234.

The power transmission part 923 may further include a tensioner 9235. The tensioner 9235 may be disposed adjacent to the first transmission part 9232, which is a drive pulley. The tensioner 9235 may be disposed to apply tension from the outside of the belt 9233. With this configuration, the tensioner 9235 may absorb a change of the tension of the belt 9233 and may adjust the tension of the belt 9233 to be constant all the time.

The rotating part 920 may further include a protrusion portion 925 connected to the outer circumferential surface of the second transmission part 9234.

The protrusion portion 925 may protrude outward in a circumferential direction of the second transmission part 9234. The protrusion portion 925 may be connected through a lower end portion of an outer circumferential surface of the second transmission part 9234 so that the protrusion portion 925 does not interfere with a connection between the belt and the second transmission part 9234. For example, the protrusion portion 925 may be a pin shape extending in the vertical direction.

The rotating part 920 may further include a micro-switch 927.

The micro-switch 927 may be disposed in an internal space of the first accommodating part 913. The micro-switch 927 may be disposed adjacent to the second transmission part 9234, but may be disposed on an outer side than a rotational radius of the second transmission part 9234. As well-known, the micro-switch 927 is a known electric switch, which is also referred to as a limit switch. The micro-switch 927 performs an on-operation when an operational lever is pressed by a mechanical operation of the other component.

The micro-switches 927 may be disposed at positions facing each other with the second transmission part 9234 disposed therebetween. That is, two micro-switches 927 may be provided on the rotating part 920. **In** one embodiment of the present disclosure, each of the operational levers of the micro-switches 927 may be disposed at a position being in contact with the protrusion portion 925 by a rotation of the second transmission part 9234. That is, as the second transmission part 9234 rotates, the protrusion portion 925 may contact the operational lever of the micro-switch 927, and the operational lever may be pressed by the protrusion portion 925.

Meanwhile, when a virtual straight line a5 connecting between contact points of the operational lever is assumed with respect to each of the micro-switches 927 being in contact with the protrusion portion 925, the straight line a5 may pass through the rotational axis A1 of the second transmission part 9234. (Refer to FIG. 19)

With this configuration, when one among the micro-switches 927 is referred to as a first micro-switch 927a, and the other thereamong is referred to a second micro-switch 927b, the first micro-switch 927a and the second micro-switch 927b become able to detect a 180-degree rotation of the protrusion portion 925.

More specifically, when the protrusion portion 925 presses the operational lever of the first micro-switch 927a, the first micro-switch 927a performs an on-operation. Thereafter, when the protrusion portion 925 rotates by 180 degrees, and presses the operational lever of the second micro-switch 927b, the second micro-switch 927b performs an on-operation.

When the first micro-switch 927a and the second micro-switch 927b perform an on-operation, an electric signal corresponding to the on-operation of the micro-switches 927a and 927b may be transmitted to the controller 940 of the charging station 900. Therefore, it can be detected that the seating plate 921 is rotated by 180 degrees.

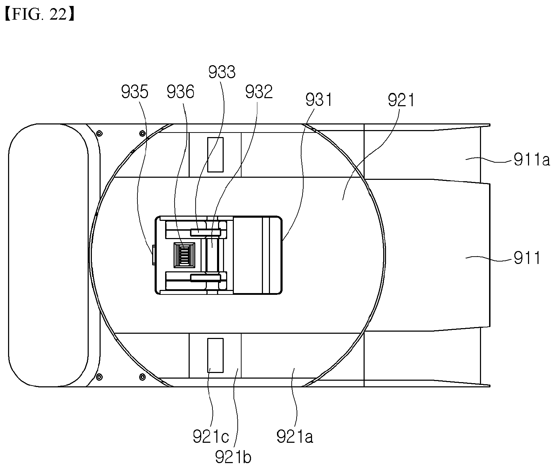

FIG. 22 is a plan view of the charging station according to one embodiment of the present disclosure.

The charging part 930 is a component to which a power supply terminal 936 for charging the robot 1 is provided.

Referring to FIGS. 17 and 18 again along with FIG. 22, the charging part 930 may be coupled to an upper portion of the rotating part 920. More specifically, the charging part 930 may be coupled to and disposed on an upper surface of the seating plate 921. Therefore, when the seating plate 921 of the rotating part 920 rotates, the charging part 930 may be rotated together. Further, when the charging part 930 and the robot 1c couple to each other, the robot 1 may be rotated by the rotation of the seating plate 921.

The charging part 930 may include a charging part body 931 and an engagement groove 932.

The charging part body 931 forms an exterior of the charging part 930. For example, the charging part body 931 may have a hexahedral shape in which a space is formed. The power supply terminal 936 may be provided on an upper surface of the charging part body 931. The charging part body 931 is disposed between the left and the right wheels of the robot 1 based on a state in which the robot 1 climbs up the rotating part 920, that is, the robot 1 stands on and stopped on the seating plate 921.

In addition, based on a state in which the robot 1 is traveling, a height from an upper surface of the seating plate 921 to an upper surface of the charging part body 931 on which the power supply terminal 936 is disposed is formed to be lower than a height from the ground to a lower end of the coupling bar 151 of the robot 1.

When the robot 1 stands on the seating plate 921, the wheels of the robot 1 are inserted into the wheel inserting grooves 921b and the transfer of the robot 1 is stopped, the charging terminal 152 of the robot 1 and the power supply terminal 936 of the charging part 930 are in a state of facing each other in the vertical direction.

At this instance, the robot 1 may couple the charging terminal 152 to the power supply terminal 936 through a drive in a manner that the robot 1 sits on the power supply terminal 936.

The engagement groove 932 is a component into which the engagement member of the robot 1 is inserted when the charging terminal 152 of the robot 1 and the power supply terminal 936 of the charging station 900 are engaged with each other, and the engagement groove 932 is disposed on an upper portion of the charging part body 931. At this instance, in one embodiment of the present disclosure, the engagement member of the robot 1 may mean the coupling bar 151 provided on the lower cover 150 of the robot 1.

The engagement groove 932 may have a V-shape or a U-shape, but the shape may vary within a limit of correspondence to the engagement member 151 so that the engagement member 151 of the robot 1 can be inserted thereinto, and is not limited.

As in the one embodiment of the present disclosure, when the engagement member 151 of the robot 1 takes the form of a circular bar, it is preferable that the engagement groove 932 has a U-shape so that the engagement member 151 can be inserted into the engagement groove 932 stably.

In the charging station 900 of the present disclosure, because the engagement groove 932 is provided and the engagement member 151 is configured to be inserted into the engagement groove 932, a contact between the charging terminal 152 and the power supply terminal 936 may be guided to be performed in a correct position.

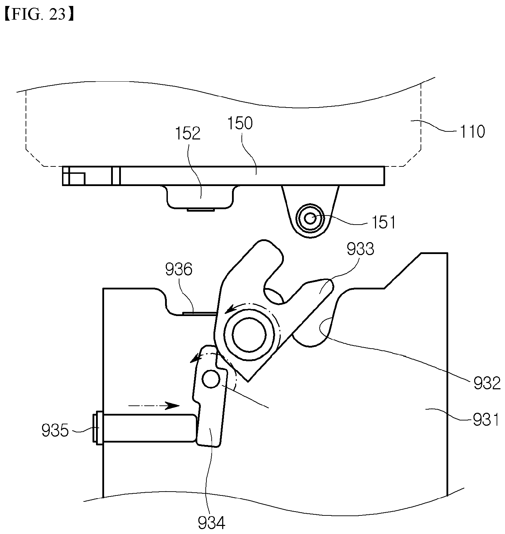

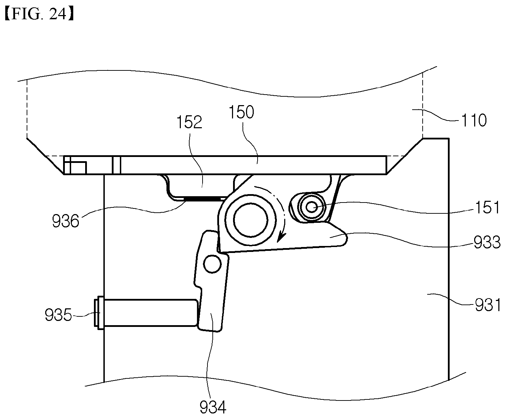

FIG. 23 is a view for describing disengagement between the robot and the charging station according to one embodiment of the present disclosure, and FIG. 24 is a view describing engagement between the robot and the charging station in the charging station according to one embodiment of the present disclosure.

The charging part 930 may further include an engagement hook 933.

The engagement hook 933 is disposed in the engagement groove 932. The engagement hook 933 is configured to engage the inserted engagement member 152, and serves to fix the engagement member 151 in the engagement groove 932. That is, as the engagement member 151 of the lower cover 150 is engaged with the engagement hook 933 of the charging station 900, the charging station 900 and the robot body 100 are physically coupled to each other.

The engagement hook 933 is rotatably coupled to the engagement groove 932. The engagement hook 933 is engaged with the engagement member 151 of the robot body 100 when the charging station 900 is coupled to the robot body 100. More specifically, one end of the engagement hook 933 is engaged with the engagement member 151 and is fixed. In another end of the engagement hook 933, a stopping threshold which is caught by a hook link 934 is formed.

The charging part 930 may further include the hook link 934.

The hook link 934 serves to prevent disengagement between the engagement hook 933 and the engagement member 151 when the engagement hook 933 is engaged with the engagement member 151 of the robot 1. The hook link 934 is disposed in an internal space of the charging part body 931. More specifically, the hook link 934 is rotatably disposed on the inside of the charging part body 931.

In one end of the hook link 934, a stopping threshold which is caught by the stopping threshold of the engagement hook 933 is formed. In other words, the stopping threshold of the engagement hook 933 is caught by the stopping threshold of the hook link 934. The other end of the hook link 934 is disposed to be adjacent to a hook switch 935 to be described below.

The charging part 930 may further include the hook switch 935.

The hook switch 935 serves to release the engagement between the engagement hook 933 and the engagement member 151. One end of the hook switch 935 is exposed to the outside of the charging part body 931, and the other end of the hook switch 935 is disposed to be accommodated in the internal space of the charging part body 931. More specifically, the hook switch 935 is disposed such that when one end thereof is pressed by the external force, the other end can linearly move within the inside of the charging part body 931. The other end of the hook switch 925 is adjacent to the other end of the hook link 934.

Referring to FIG. 23, the separation between the robot 1 and the charging station 900 is described as follows.

When one end of the hook switch 935 is pressed, the other end of the hook link 934 is pushed and the hook link 934 rotates in the anti-clockwise direction. At this instance, the stopping threshold of the hook link 934 and the stopping threshold of the engagement hook 933 are disengaged and the engagement hook 933 rotates in the anti-clockwise direction. With this configuration, the engagement between the engagement hook 933 and the engagement member 151 is released, and the robot 1 can be separated from the charging station 900.

Referring to FIG. 24, the engagement between the robot 1 and the charging station 900 is described as follows.

The engagement between the engagement member 151 and the engagement hook 933 is performed according to a process reverse to the disengagement described above. As the engagement member 151 is inserted into the engagement groove 932, the engagement member 151 presses one end of the engagement hook 933. As the engagement member 151 is inserted into the U-shaped groove formed on one end of the engagement hook 933, the engagement hook 933 rotates in the clockwise direction. The engagement member 151 is inserted into the engagement groove 932 of the charging part 930 in a state in which the engagement member 151 is caught by the U-shaped groove of the engagement hook 933.

In a state in which the engagement member 151 cannot be inserted any further thereinto, the U-shaped groove of the engagement hook 933 is opened toward a side surface, and the engagement groove 932 is opened upward. Therefore, the movement of the engagement member 151 is blocked by the engagement hook 933 on its upper portion, and is blocked by the engagement groove 932 on its side surface, thereby the engagement member 151 is fixed in the engagement groove 932 in the end. At this instance, the stopping threshold formed on the other end of the engagement hook 933 and the stopping threshold of the hook link 934 are engaged with each other.

As soon as the engagement member 151 of the robot 1 is inserted into and fixed in the engagement groove 932 of the charging station 900, the charging terminal 152 of the robot 1 and the power supply terminal 936 of the charging station 900 contact each other. That is, the robot 1 and the charging station 900 are electrically connected to each other, and the power is supplied from the charging station 900 to the robot 1. In other words, the battery 560 of the robot 1 is charged.

Meanwhile, referring to FIG. 22 again, the embodiment of the present disclosure is illustrated that the power supply terminal 936 is disposed at a more rearward position than the engagement groove 932 (a forward position based on a direction in which the robot 1 enters), however, the power supply terminal 936 may be disposed at a more forward position than the engagement groove 932.

In addition, the embodiment of the present disclosure is described that the engagement between the engagement hook 933 and the engagement member 151 is disengaged only by physical pressure on the hook switch 935, however, the engagement between the engagement hook 933 and the engagement member 151 may be disengaged by the electric signal. In this case, a separate power transmission member may be disposed in the internal space of the charging part body 931 and may be connected to the engagement hook 933 so as to rotate the engagement hook 933. The electric signal for the disengagement may be generated by the controller 940.

Referring to FIG. 18 again, the charging part 930 may further include a light emitting part 937.

The light emitting part 937 may be disposed in the internal space of the charging part body 931, but the light emitted by the light emitting part 937 may be emitted to the outside of the charging part body 931. The light emitting part 937 may be an IR LED which radiates infrared light. At this instance, the IR LED may be exposed to a front surface of the charging part body 931.

An IR sensor 533 of the robot may detect the infrared light radiated by the light emitting part 937. When the IR sensor 533 detects the infrared light, the robot 1 may move in a direction in which the infrared light is detected and approach to the charging station 900.

The robot 1 may approach to the charging station 900 dependent on the IR sensor 533 until the charging station 900 is recognized by the first camera 531 or the second camera 532. After the charging station 900 is recognized by the first camera 531 or the second camera 532, the attitude of the robot 1 is aligned elaborately through the first camera 531 or the second camera 532, and the robot 1 can climb up the charging station 900.

By doing so, time taken for searching the charging station may be saved compared to a case of detecting the charging station 900 only dependent on a vision of the cameras.

Referring to FIGS. 19 and 20 again, the charging station 900 may further include the controller 940.

The controller 940 may be disposed in the internal space of the second accommodating portion 915. The controller 940 may be installed on a PCB disposed in the internal space of the second accommodating portion 915. The controller 940 may control overall operations of the charging station 900.

For example, the controller 940 may control operations of the motor 9231 so as to rotate the seating plate 921. The controller 940 may control the seating plate 921 to rotate when the charging terminal 152 of the robot is electrically connected to the power supply terminal 936. The controller 940 may control a rotation of the seating plate 921 to stop when the seating plate 921 rotates by 180 degrees and the micro-switch 927 performs an on-operation.

Meanwhile, the controller 940 may include all types of devices capable of processing data, such as a processor. Here, "processor" may be, for example, a data processing device built into hardware, which has a physically structured circuit to perform a function expressed by code or commands included in a program. As an example of the data processing device built into hardware, processing devices such as a microprocessor, a central processing unit (CPU), a processor core, a multiprocessor, an application-specific integrated circuit (ASIC), and a field programmable gate array (FPGA) may be included, but the scope of the present disclosure is limited thereto.

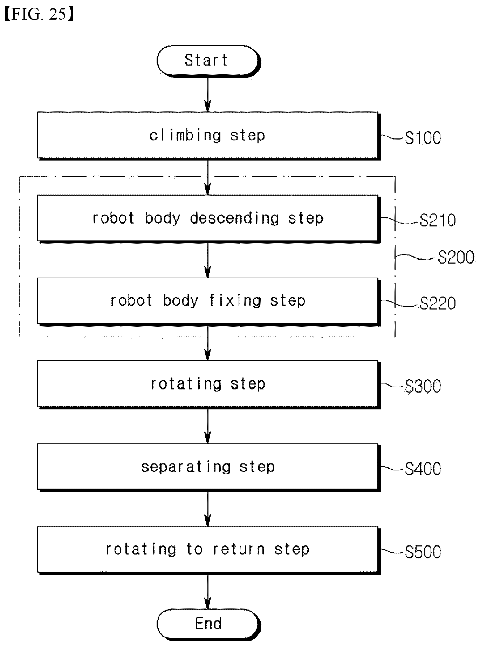

Hereinafter, referring to FIG. 25 and the following figures, a method for charging the robot which is one embodiment of the present disclosure will be described per step.

FIG. 25 is a flowchart of a method for charging the robot according to one embodiment of the present disclosure.

A method for charging the robot which is one embodiment of the present disclosure may be performed by a robot system which includes the robot 1, and the charging station 900 configured to supply power to the robot 1 so as to charge the robot 1.

Referring to FIG. 25, the method for charging the robot may include a climbing step (S100), a coupling step (S200), and a rotating step (S300).

The climbing step (S100) is a step in which the wheel 310 of the robot 1 climbs up the charging part 920 of the charging station 900.

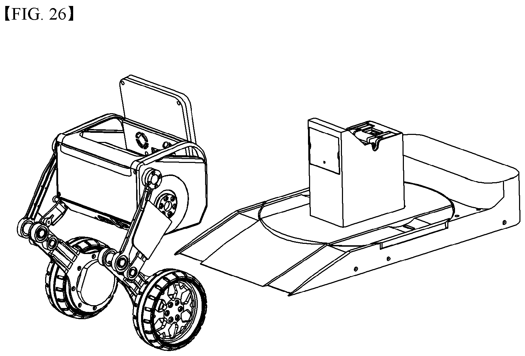

The robot 1 may start searching the charging station 900 according to a command of the user, or a state of charge equal to or less than a predetermined level. As described above, searching of the charging station 900 is performed by cooperation between the IR sensor 533 and the first camera 531 or the second camera 532. A position of the charging station 900 may be found out through a direction vector with respect to the robot 1. By doing so, the robot 1 may align its attitude such that the charging station 900 is disposed in front of the robot 1. (Refer to FIG. 26)

The robot 1 may climb up the charging station 900 by moving forward. As described above, the climbing the charging station 900 may be guided by the wheel guide portions 911a and 921a provided in the inclined portion 911 and the seating plate 921, and continues until the wheel 310 of the robot 1 is inserted into the wheel inserting groove 921b of the seating plate 921.

In a possible embodiment, the robot 1 may detect vibration when the wheel 310 is inserted into the wheel inserting groove 921b. In this case, a sensing means configured to detect vibration of the wheel 310 may be further provided in the robot body 100.

In another possible embodiment, when the robot detecting button 921c is pressed, the charging station 900 may transmit a corresponding control signal to the robot 1.

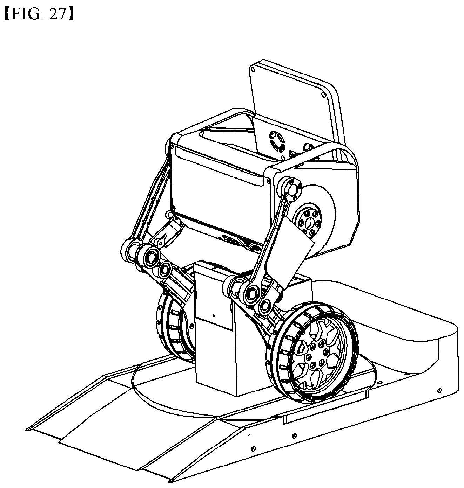

As such, the robot 1 may be controlled by itself or by a control signal to be stopped in the wheel inserting groove 921b. (Refer to FIG. 27)

Next, the coupling step S200 is a step in which the charging terminal 532 of the robot 1 and the power supply terminal 936 of the charging station 900 are electrically coupled to each other so that power is supplied to the robot 1 (S200).

More specifically, the present step (S200) may include a robot body descending step (S210) and a robot body fixing step (S220).

The robot body descending step (S210) is a step in which the robot body 100 moves downward after the robot stops in the wheel inserting groove 921b, the charging terminal 152 and the power supply terminal 936 contact each other to be coupled to each other, and descending of the robot body 100 is performed by drive of the suspension motor MS.

At this instance, the suspension motor MS is driven to rotate such that an angle between the first link 210 and the third link 230 decreases. Decrease of the angle formed between the first link 210 and the third link 230 means that a distance between the wheel 310 and the robot body 100 becomes close, that is, the robot body 100 descends.

The rotation of the suspension motor MS continues until the charging terminal 152 and the power supply terminal 936 contact each other to be coupled to each other. By doing so, the robot 1 and the charging station 900 can be electrically connected to each other, and the battery 560 of the robot 1 can be charged.

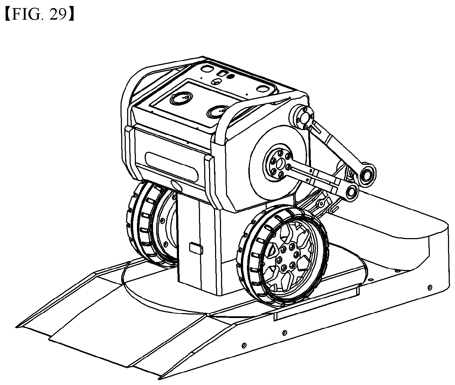

Meanwhile, in the present step (S210), the lower cover 150 of the robot 1 meets an upper surface of the charging part 930, and the robot 1 is placed on the charging part 930 in a form of leaning on and taking rest on the charging part 930. (Refer to FIG. 29)

The robot body fixing step (S220) is a step in which the engagement member 151 of the robot 1 and the engagement hook 933 of the charging station 900 are engaged with each other.

As described above, when the robot body 100 descends, the engagement member 151 of the robot 1 is inserted into the engagement groove 932 of the charging station 900, and is engaged with the engagement hook 933. Therefore, the robot 1 may be fixed to the charging station 900 despite the restoring force of the gravity compensator 215. The robot 1 and the charging station 900 are fixed, the suspension motor MS need not drive any more, thereby use of power is saved. In addition, when the robot 1 and the charging station 900 are fixed, the electrical connection between the robot 1 and the charging station 900 can be maintained stably without shaking.

Meanwhile, in the present step (S220), the display unit 554 of the robot 1 may be tilted rearward. As such, during when the robot 1 is charged, the robot body 100 sitting on and taking rest on the charging part 930 and/or the display unit 554 of the robot 1 being tilted rearward may be understood intuitively by a user that the robot 1 does not fulfil a command and is on a stand-by state.

Next, the rotating step (S300) may be a step in which the rotating part 920 of the charging station 900 rotates together with the robot 1 such that a direction in which a front surface of the robot 1 looks is changed by 180 degrees.

More specifically, in the present step (S300), the controller 940 of the charging station 900 controls to drive the motor 9231 such that the seating plate 921 is rotated. The seating plate 921 rotates in the clockwise direction or the anti-clockwise direction and stops when the rotation by 180 degrees based on a previous state is completed. Rotation of the seating plate 921 by 180 degrees may be detected from pressing the micro-switch by the protrusion portion 925 as described above.

Regarding a time point when the seating plate 921 is rotated, when insertion of the wheel 310 of the robot 1 into the wheel inserting groove 921b is detected, the rotation of the seating plate 921 may be performed. To ensure a stable rotation, it is preferable that after the wheel 310 is inserted into the wheel inserting groove 921b and the robot 1 is fixed to the charging station 900, the rotation of the seating plate 921 is performed. (Refer to FIG. 29)

Meanwhile, the front surface of the robot 1 means a direction in which the display unit 554 is headed. Alternatively, the front surface of the robot 1 means a direction in which the first camera 531 is headed. As described above, the charging station 900 at home is disposed such that the second accommodating portion 915 is headed toward a wall surface. That is, before the seating plate 921 rotates, the front surface of the robot 1 views a wall, and after the seating plate 921 rotates, the front surface of the robot 1 and the wall are opposite each other. Therefore, when charging of the robot 1 is completed, the robot 1 does not need to leave the charging station 900 through a rearward movement, but may leave the charging station 900 through a forward movement.

The method for charging the robot according to one embodiment of the present disclosure may further include a separating step (S400).

In the separating step S400, coupling between the charging terminal 152 and the power supply terminal 936 is released. That is, the electrical connection between the robot 1 and the charging station 900 is released. At this instance, the release may be carried out by pressing of the hook switch 935 by a user. Alternatively, the release may be carried out by the electric signal generated by the controller 940.

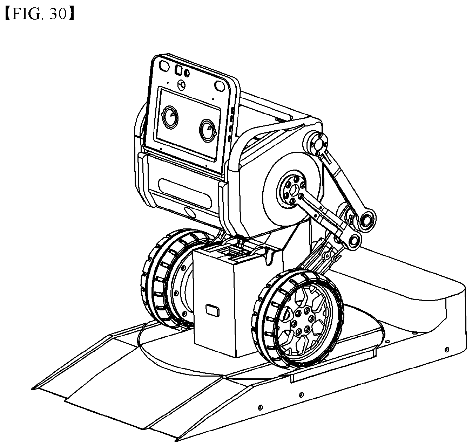

When the engagement between the robot 1 and the charging station 900 is disengaged, the robot body 100 moves upward by a restoring force of the gravity compensator 215. At the same time, or sequentially thereafter, the display unit 554 in a state of being tilted rearward rotates toward a forward direction. (Refer to FIG. 30)

The method for charging the robot may further include a rotating to return step (S500).

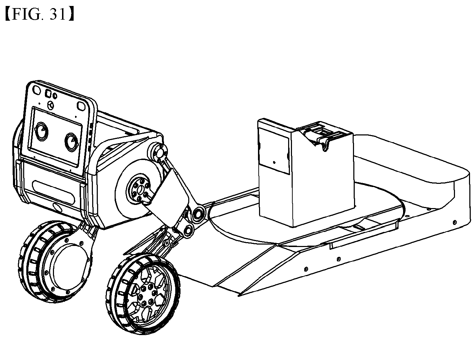

When the robot 1 completes charging, or leaves the charging station 900 as the charging of the robot 1 is completed or by a command of a user, the rotating part 920 rotates to return to an initial position. In other words, the rotating part 920 rotates by 180 degrees to return to its original position (Refer to FIG. 31).

Rotation by 180 degrees may be detected from pressing of the micro-switch by the protrusion portion 925 as described above. At this instance, the micro-switch 927 detecting the rotation in the rotating step (S400), and the micro-switch 927 detecting the rotation in the rotating to return step (S500) are disposed at positions facing each other.

By doing so, the robot 1 may enter the charging station 900 through the forward movement when entering the charging station 900 for charging.

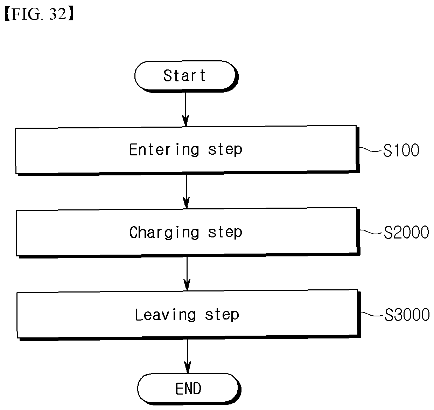

FIG. 32 is a flowchart illustrating a flow of another embodiment of the method for charging the robot.

The embodiment in FIG. 32 may be performed by a robot system which includes the robot 1, and the charging station 900 configured to supply power to the robot 1 so as to charge the robot 1.

Referring to FIG. 32, the method for charging the robot may include an entering step (S1000), a charging step (S2000), and a leaving step (S3000).

The entering step (S1000) is a step in which the robot 1 moves to approach to the charging station 900 and climbs up the station body 910 of the charging station 900. (Refer to FIGS. 26 and 27)

In the present step (S1000), at least one or more motors among the wheel motor MW and the terminal rotating motor 9231 included in the robot system may be driven.

The wheel motor MW may be driven as the robot 1 moves to approach to the charging station 900, and as the robot 1 moves to climb up the station body 910.

In a possible embodiment, drive of the terminal rotating motor 9231 may be performed at the same time with, or before a movement of the robot 1 for approaching to the charging station 900. As described above, according to the drive of the terminal rotating motor 9231, the rotating part 920 and the charging part 930 rotate, and a direction of the power supply terminal 936 disposed in the charging part 930 is changed. Due to the rotation of the power supply terminal 936, the charging terminal 152 and the power supply terminal 936 may be aligned with each other in a direction in which coupling therebetween is made possible.

A rotation of the charging part 930 performed upon or before the robot approaches to the charging station means that the light emitting part 937 viewing the rearward direction rotates to view the forward direction (based on the charging station). (a first rotation)

Due to the first rotation, the robot 1 may easily search the charging station 900.

In a possible embodiment, a rotation of the terminal rotating motor 9231 may be performed after the robot climbs up the charging station. According to the rotation of the terminal rotating motor 9231, the rotating part 920 and the charging part 930 rotate, and the light emitting part 937 viewing the forward direction rotates to view the rearward direction (a second rotation).

As described above, the seating plate 921 and the charging part 930 rotate together. The second rotation is performed after the robot 1 climbs up the seating plate 921, therefore, the robot 1 may rotate together with the charging part 930 by the second rotation.

With this configuration, the robot 1 views the forward direction based on the charging station 900, and the robot 1 can leave the charging station 900 through the forward movement in the leaving step (S3000) to be described below.

In addition, with this configuration, the charging part 930 and the robot 1 rotate in one direction together, thereby a direction of the coupling between the charging terminal 152 and the power supply terminal 936 maintains to be aligned.

The charging step (S2000) is a step in which the charging terminal 152 provided in the robot 1 and the power supply terminal 936 provided in the charging station 900 are electrically connected to each other. That is, in the present step (S2000), power is supplied to the battery 560 of the robot 1 and the robot 1 is charged.

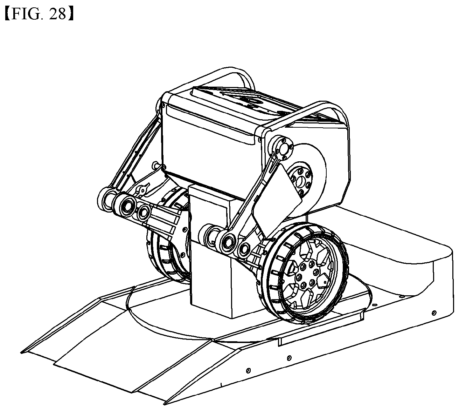

In the present step (S2000), the robot body 100 may be moved in a direction close to the ground. The fact that the robot body 100 is moved in a direction close to the ground means that a height of the robot body 100 is lowered, that is, a relative height of an upper surface or a lower surface of the robot body 100 is lowered with respect to the ground. This may be referred to as 'a motion of sitting on the charging part 930' of the robot body 100 from another point of view. (Refer to FIG. 28)

When the height of the robot body 100 is lowered, the charging terminal 152 disposed on the lower surface of the robot body 100 and the power supply terminal 936 disposed on an upper surface of the charging part 930 gradually become close and finally contact each other.

The motion of the robot body 100 sitting on the charging part 930 may be performed by the suspension motor MS. More specifically, the suspension motor MS may rotate such that an angle between the first link 210 and the third link 230 decreases. From another point of view, the suspension motor MS may rotate such that the wheel 310 and the robot body 100 become close to each other.

Meanwhile, the second rotation described above may be performed in the present step (S2000).

That is, after the height of the robot body 100 is lowered and the charging terminal 152 and the power supply terminal 936 contact each other, the second rotation may be performed (Refer to FIG. 29).

With this configuration, as the robot 1 rotates in a state in which the robot 1 is coupled to the charging part 930, there is an effect that shaking of the robot body 100 caused by the rotation decreases.

The leaving step S3000 is a step in which the robot 1 moves to leave the charging station 900.

The movement of the robot 1 to leave the charging station 900 may be performed right after the charging of the robot 1 is completed. Alternatively, the robot 1 may stand by in the charging station 900 after the charging is completed, and leave the charging station 900 by a call of a user. Alternatively, the robot 1 may stand by in the charging station 900 after the charging is completed, and leave the charging station 900 when a certain period of time elapses. Alternatively, the robot 1 may stand by in the charging station 900 after the charging is completed, and leave the charging station 900 by the occurrence of a certain event. At this instance, the certain event may be a call by a user, detection of user return after going out, or the like.

In order for the robot 1 to leave the charging station 900, the electrical coupling between the robot 1 and the charging station 900 must be released. The robot body 100 may be moved toward a direction away from the ground to make the electric coupling be uncoupled.

The fact that the robot body 100 is moved toward a direction away from the ground means that the height of the robot body 100 gets higher, that is, a relative height of the upper surface or the lower surface of the robot body 100 gets higher with respect to the ground. This may be referred to as 'a motion of standing up from the charging part 930' of the robot 100 from another point of view. (Refer to FIG. 30)

When the height of the robot body 100 gets higher, the charging terminal 152 disposed on the lower surface of the robot body 100 and the power supply terminal 936 disposed on the upper surface of the charging part 930 become away from each other and the electric connection therebetween is released.

The motion of standing up from the charging part 930 of the robot 100 may be performed by the suspension motor MS. More specifically, the suspension motor MS may rotate such that an angle between the first link 210 and the third link 230 increases. From another point of view, the suspension motor MS may rotate such that the wheel 310 and the robot body 100 become away from each other.

The motion of standing up from the charging part 930 of the robot body 100 may be performed by the restoring force of the gravity compensator 215. At this instance, the angle between the first link 210 and the third link 230 increases, and the suspension motor MS may rotate.

In the embodiment of FIG. 32, the attitude change of the robot body 100 throughout the entering step (S1000), the charging step (S2000), and the leaving step (S3000) may take place at least once or more.

At this instance, the attitude change of the robot body 100 may include a height change of the robot body 100. The height change of the robot body 100 may be performed in the charging step (S2000) or the leaving step (S3000). The height change of the robot body 100 may include getting higher compared to a reference height or getting lower compared to a reference height when the reference height is the height of the robot body 100 while traveling on the ground without an event.

The attitude change of the robot body 100 may include the rotation of the robot body 100. At this instance, the rotation of the robot body 100 may be performed in the entering step (S1000). Alternatively, the rotation of the robot body 100 may be performed in the charging step (S2000). (Refer to FIG. 29)

The attitude change of the robot body 100 may include a rotation of the display unit 554 of the robot body 100. At this instance, the rotation of the display unit 554 may mean that the display unit 554 rotates rearward and is tilted. Alternatively, it may mean that the display unit 554 in a state of being tilted rotates forward and gets up. The rotation of the display unit 554 may be performed in the charging step (S2000) or the leaving step (S3000). (Refer to FIGS. 28 and 30)

A direction of the rotation of the wheel motor MW in the entering step (S1000) and the leaving step (S3000) may be one direction.

At this instance, in both the entering step (S1000) and the leaving step (S3000), the wheel motor MS may rotate in a direction in which the robot body 100 moves forward. The rotation in one direction may be implemented by the rotation of the robot body 100 (the second rotation) performed in the entering step (S1000) or the charging step (S2000).

The direction of the rotation of the wheel motor MW in the entering step (S1000) and the direction of the rotation of the wheel motor MW in the leaving step (S3000) may be opposite directions.

More specifically, the suspension motor MS in the entering step (S1000) may rotate in a direction in which the motion of sitting of the robot body 100 is implemented, and the suspension motor MS in the leaving step (S3000) may rotate in a direction in which the motion of standing up of the robot body 100 is implemented.

At this instance, as another possible embodiment, the suspension motor MS in the entering step (S1000) may rotate in a direction in which the motion of standing up of the robot body 100 is implemented and the suspension motor MS in the leaving step (S3000) may rotate in a direction in which the motion of sitting of the robot body 100 is implemented. Such an embodiment may be implemented when a relative height of the power supply terminal 936 with respect to the ground is higher than a relative height of the charging terminal 152 with respect to the ground based on a state in which the wheel 310 of the robot 1 climbs up on the seating plate 921.

As described above, according to the present disclosure, because the seating plate is configured to rotate by 180 degrees after the robot is coupled to the charging station, the motions of the robot to enter the charging station and to leave the charging station can both be possible through the forward movement. Therefore, there is an effect that the entry and exit of the robot into/from the charging station is made easy.

In addition, according to the present disclosure, when the robot is coupled to the charging station, because the engagement hook of the charging station and the engagement member of the robot are engaged with each other, the fixed coupling between the robot and the charging station is made possible. Therefore, power supply to the robot while the robot is charged can be stably maintained.

The block diagrams as described in the disclosure may be construed by one of ordinary skill in the art as conceptual representation of circuitry for implementing principles of the disclosure. Similarly, it is also understood by one of ordinary skill in the art that any flowcharts, flow diagrams, state transitions, pseudo codes, etc., may be substantially embodied in a computer-readable medium as various processes that may be carried out by a computer or processor, whether or not the computer or the processor is explicitly shown.

Accordingly, the aforementioned embodiments can be written as computer programs and can be implemented in general-use digital computers that execute the programs using a computer readable recording medium. Examples of the computer readable recording medium include magnetic storage media (e.g., ROM, floppy disks, hard disks, etc.), optical recording media (e.g., CD-ROMs, or DVDs), etc.

The functions of various elements illustrated in the drawings may be related to appropriate software, and be provided via not only hardware capable of executing the software but also exclusive hardware. These functions may also be provided via a single exclusive processor, a single shared processor, or a plurality of individual processors, some of which may be shared.

Also, explicit use of the term 'processor' or 'controller' is not limited to exclusively using hardware capable of executing software, and may implicitly include a digital signal processor (DSP) hardware, and a read-only memory (ROM), a random access memory (RAM), or a non-volatile storage medium for storing software.

While the exemplary embodiments have been particularly shown and described with reference to the drawings, it will be understood by those of ordinary skill in the art that various changes in form and details may be made therein without departing from the spirit and scope of the inventive concept as defined by the appended claims. The exemplary embodiments should be considered in descriptive sense only and not for purposes of limitation. Therefore, the scope of the inventive concept is defined not by the described embodiments but by the appended claims.

## Claims

1. A charging station configured to charge a robot by supplying power to the robot, comprising:
a station body having a space inside and placed on a ground to allow the robot to approach and climb up the station body;
a rotating part disposed in the station body and coupled to the station body so as to be rotatable relative thereto; and
a charging part coupled to an upper portion of the rotating part configured to rotate together with the rotating part according to a rotation of the rotating part, and provided with a power supply terminal so as to charge the robot.

2. The charging station of claim 1,
wherein the station body comprises:
an inclined portion disposed at an entrance that the robot climbs and having an upward inclination toward a forward direction in which the robot approaches.

3. The charging station of claim 2,
wherein in the inclined portion, a wheel guide portion having a groove formed to guide a movement of the robot with respect to a wheel of the robot is provided, and
wherein in the wheel guide portion, at the entrance that the robot climbs, a width of the groove is formed to be greater than a width of the wheel, and the width of the groove is narrowed in comparison with the entrance toward a forward direction of a climb path of the robot.

4. The charging station of claim 1,
wherein the rotating part comprises:
a seating plate allowing the wheel of the robot to be seated thereon and configured to be rotated by a rotation of a motor; and
a power transmission part accommodated in an internal space of the station body together with the motor and configured to transmit power generated by the rotation of the motor to the seating plate.

5. The charging station of claim 4,
wherein the seating plate comprises:
wheel inserting grooves disposed at stop positions of left and right wheels of the robot so that the robot stops at a correct position; and
a robot detecting button disposed in the wheel inserting groove and configured to detect a weight of the robot.

6. The charging station of claim 4,
wherein the power transmission part comprises:
a first transmission part configured to rotate by receiving a rotating power of the motor;
a belt connected to the first transmission part; and
a second transmission part coupled coaxially with the seating plate, connected to the belt, and configured to receive a rotating power of the first transmission part and to rotate the seating plate.

7. The charging station of claim 6,
wherein the power transmission part further comprises:
a tensioner configured to adjust tension of the belt.

8. The charging station of claim 6,
wherein the rotating part further comprises:
a protrusion portion connected to an outer circumferential surface of the second transmission part so as to protrude circumferentially outward of the second transmission part; and
a micro-switch disposed at a position connected to the protrusion portion by a rotation of the second transmission part.

9. The charging station of claim 1,
wherein the charging part comprises:
a charging part body disposed between the left and the right wheels of the robot based on a state where the robot climbs up the rotating part; and
an engagement groove disposed on an upper portion of the charging part body and into which an engagement member of the robot being inserted.

10. The charging station of claim 9,
wherein the charging part further comprises:
an engagement hook disposed in the engagement groove and configured to be engaged with the inserted engagement member of the robot.

11. The charging station of claim 10,
wherein the charging part further comprises:
a hook link having one end adjacent to the engagement hook and configured such that when one end of the engagement hook is caught by the engagement member of the robot, another end of the engagement hook is caught by the one end of the hook link; and
a hook switch adjacent to another end of the hook link and configured to press the another end of the hook link so as to release catching of the engagement hook.

12. A method for charging a robot by a robot system comprising the robot and a charging station configured to charge the robot by supplying power, comprising:
a climbing step of allowing a wheel of the robot to climb up a rotating part of the charging station;
a coupling step of allowing a charging terminal of the robot and a power supply terminal of the charging station to be electrically connected to each other so that power is supplied to the robot; and
a rotating step of allowing the rotating part of the charging station to rotate together with the robot so that a direction in which a front surface of the robot is headed is changed by 180 degrees.

13. The method of claim 12,
wherein the robot comprises:
a robot body in which a charging terminal is provided;
leg units provided on left and right side surfaces of the robot body, respectively, and coupled to the wheels configured to roll on a ground; and
a suspension motor accommodated in the robot body and connected to the leg units on left and right sides, respectively, so as to provide a driving force to the leg units,
wherein the coupling step comprises:
a robot body descending step of moving the robot body downward by the leg unit through drive of the suspension motor so as to allow the charging terminal and the power supply terminal to contact each other to be coupled to each other; and
a robot body fixing step of allowing the engagement member disposed below the robot body and the engagement hook disposed on an upper portion of the charging station to be engaged with each other.

14. The method of claim 12, further comprising:
a separating step of separating the charging terminal and the power supply terminal; and
a rotating to return step of allowing the rotating part to rotate to return to an initial position after the robot leaves the charging station.

15. A method for charging a robot by a robot system comprising the robot and a charging station configured to charge the robot by supplying power, comprising:
an entering step of allowing the robot to move and approach to the charging station and climbing up a station body of the charging station;
a charging step of allowing a charging terminal provided in the robot and a power supply terminal provided in the charging station to be electrically connected to each other; and
a leaving step of allowing the robot to leave the charging station,
wherein the robot comprises:
a robot body in which a charging terminal is provided; and
a wheel motor connected to a wheel configured to roll on a ground so as to provide a driving force to the wheel,
wherein the charging station comprises:
a station body having a space inside and placed on a ground to allow the robot to approach and climb up the station body;
a charging part disposed in the station body and provided with a power supply terminal; and
a terminal rotating motor configured to rotate the charging part and to change a direction of the power supply terminal, and
wherein in the entering step, at least one or more motors among the wheel motor and the terminal rotating motor are driven.

16. The method of claim 15,
wherein in the charging step, the robot body is moved toward a direction close to a ground.

17. The method of claim 15,
wherein the robot further comprises:
a suspension motor connected to a link structure connecting the wheel and the robot body to each other and configured to provide a driving force with respect to a movement of the robot body in a vertical direction, and
wherein in the charging step, the suspension motor is driven to allow the robot body and the wheel to be close to each other.

18. The method of claim 15,
wherein in the leaving step, the robot body is moved toward a direction away from a ground.

19. The method of claim 15,
wherein an attitude change of the robot body occurs at least once or more throughout the entering step, the charging step, and the leaving step.

20. The method of claim 15,
wherein in the entering step and the leaving step, the wheel motor is driven to be rotated in one direction.

21. The method of claim 12, further comprising:
a suspension motor connected to a link structure connecting the wheel and the robot body to each other and configured to provide a driving force with respect to a movement of the robot body in a vertical direction,
wherein a rotational direction of the suspension motor in the entering step and a rotational direction of the suspension motor in the leaving step are opposite to each other.
